# EUROPÄISCHE PATENTSCHRIFT

(11) **EP 4 084 933 B1**
(45) Veröffentlichungstag und Bekanntmachung des Hinweises auf die Patenterteilung: **24.04.2024**
(21) Anmeldenummer: 20816143.0
(22) Anmeldetag: 26.11.2020
(51) Int. Cl.: B25F 5/00

(54) **ELEKTRONIKVORRICHTUNG UND WERKZEUGMASCHINE MIT DER ELEKTRONIKVORRICHTUNG**
ELECTRONIC APPARATUS AND MACHINE TOOL HAVING SAID ELECTRONIC APPARATUS
DISPOSITIF ÉLECTRONIQUE ET MACHINE-OUTIL COMPRENANT LEDIT DISPOSITIF ÉLECTRONIQUE

(30) Priorität: 30.12.2019 DE 102019220624; 25.11.2020 DE 102020214816
(43) Veröffentlichungstag der Anmeldung: 09.11.2022
(73) Patentinhaber: Robert Bosch GmbH, 70442 Stuttgart (DE)
(72) Erfinder: BARTH, Daniel, 70771 Leinfelden-Echterdingen (DE)
(86) Internationale Anmeldenummer: PCT/EP2020/083452
(87) Internationale Veröffentlichungsnummer: WO 2021/136619

(56) Entgegenhaltungen:
- EP-A1- 3 549 717
- EP-A2- 1 398 865
- WO-A1-2019/130981
- DE-A1-102007 000 290
- DE-A1-102009 015 422
- DE-A1-102013 202 672
- DE-A1-102015 111 717
- US-A1- 2014 265 664

## Beschreibung

### Stand der Technik

Es ist bereits eine Elektronikvorrichtung für eine Werkzeugmaschine, mit zumindest einer Elektronikeinheit und mit zumindest einer Fluidkühlungseinheit zur Kühlung der Elektronikeinheit mittels eines Fluids, vorgeschlagen worden.

WO 2019/130981 A1 offenbart den Oberbegriff des Anspruches 1.

Andere Beispiele sind aus der DE 10 2013 202672 A1, EP 3 549 717 A1, DE 10 2007 000290 A1, D5 US 2014/265664 A1, DE 10 2009 015422 A1, EP 1 398 865 A2 oder DE 10 2015 111717 A1 bekannt.

### Offenbarung der Erfindung

Die Erfindung geht aus von einer Elektronikvorrichtung für eine Werkzeugmaschine, mit zumindest einer Elektronikeinheit und mit zumindest einer Fluidkühlungseinheit zur Kühlung der Elektronikeinheit mittels eines Fluids.

Es wird vorgeschlagen, dass die Elektronikeinheit zumindest größtenteils, insbesondere vollständig, außerhalb eines Fluidströmungspfads der Fluidkühlungseinheit angeordnet ist.

Vorzugsweise umfasst die Fluidkühlungseinheit zumindest ein Kanalelement, wobei insbesondere der Fluidströmungspfad, insbesondere in einem Bereich, in dem die Elektronikeinheit angeordnet ist, zumindest größtenteils durch das Kanalelement verläuft. Unter einem "Fluidströmungspfad" soll insbesondere ein simulierter beziehungsweise berechneter oder ein gemessener Strömungsverlauf des Fluids durch die Fluidkühlungseinheit verstanden werden, wobei sich insbesondere mindestens 92%, vorzugsweise mindestens 95% und besonders bevorzugt mindestens 98%, aller Teilchen des Fluids innerhalb des Strömungsverlaufs bewegen. Insbesondere ist der Fluidströmungspfad als eine Schar von, insbesondere mindestens 92%, vorzugsweise mindestens 95% und besonders bevorzugt mindestens 98%, aller möglichen Strömungspfade der Teilchen des Fluids beziehungsweise Fluidstroms ausgebildet. Vorzugsweise erstreckt sich der Fluidströmungspfad von zumindest einer Einsaugöffnung der Fluidkühlungseinheit bis zu zumindest einer Auslassöffnung der Fluidkühlungseinheit. Die Fluidkühlungseinheit weist eine Führungsstrecke auf, entlang derer der Fluidströmungspfad ausgebildet ist. Insbesondere ist die Führungsstrecke entlang einer Haupterstreckungsrichtung des Fluidströmungspfads ausgebildet. Unter einer "Haupterstreckungsrichtung" eines Objekts, insbesondere des Fluidströmungspfads, soll dabei insbesondere eine Richtung verstanden werden, welche parallel zu einer längsten Kante eines kleinsten geometrischen Quaders verläuft, welcher das Objekt gerade noch vollständig umschließt. Vorzugsweise ist die Elektronikeinheit zumindest größtenteils, insbesondere vollständig, außerhalb einer von der Fluidkühlungseinheit umschlossenen Strömungsausnehmung zur Leitung des Fluids beziehungsweise des Fluidstroms angeordnet. Besonders bevorzugt ist die Fluidströmungseinheit derart ausgebildet und/oder die Elektronikeinheit derart angeordnet, dass die Elektronikeinheit, insbesondere über ein Kanalelement der Fluidkühlungseinheit, beabstandet von dem Fluidströmungspfad und/oder der von der Fluidkühlungseinheit umschlossenen Strömungsausnehmung angeordnet ist.

Bevorzugt ist die Einsaugöffnung von einer Gehäuseeinheit der Werkzeugmaschine begrenzt. Insbesondere ist die Einsaugöffnung an einer einem Bearbeitungsbereich der Werkzeugmaschine abgewandten Seite der Gehäuseeinheit angeordnet. Bevorzugt ist die Auslassöffnung von der Gehäuseeinheit zumindest teilweise begrenzt und bevorzugt beabstandet von der Einsaugöffnung angeordnet. Bevorzugt ist die Fluidkühlungseinheit dazu vorgesehen, das Fluid über einen Fluidstrom durch die Gehäuseeinheit zu leiten. Unter "vorgesehen" soll insbesondere speziell programmiert, speziell ausgelegt und/oder speziell ausgestattet verstanden werden. Darunter, dass ein Objekt, insbesondere die Fluidkühlungseinheit, zu einer bestimmten Funktion, insbesondere das Fluid über einen Fluidstrom durch die Gehäuseeinheit zu leiten, vorgesehen ist, soll insbesondere verstanden werden, dass das Objekt diese bestimmte Funktion in zumindest einem Anwendungs- und/oder Betriebszustand erfüllt und/oder ausführt. Bevorzugt ist die Fluidkühlungseinheit dazu vorgesehen, den Fluidstrom über die Einsaugöffnung durch zumindest ein Kanalelement an der Elektronikeinheit und/oder einer Antriebseinheit der Werkzeugmaschine vorbei zu der Auslassöffnung zu leiten. Insbesondere ist das zumindest eine Kanalelement zumindest im Wesentlichen vollständig innerhalb der Gehäuseeinheit angeordnet. Unter "im Wesentlichen vollständig" soll insbesondere eine Angabe eines Anteils eines Bauteils, insbesondere des Kanalelements, welcher eine bestimmte Eigenschaft, insbesondere von der Gehäuseeinheit umschlossen zu sein, aufweist, verstanden werden, wobei insbesondere mindestens 90%, vorzugsweise mindestens 95% und besonders bevorzugt mindestens 98% eines gesamten Volumens und/oder einer gesamten Masse des Bauteils die Eigenschaft aufweist. Vorzugsweise ist die Werkzeugmaschine als eine handgeführte Werkzeugmaschine ausgebildet. Beispielsweise ist die Werkzeugmaschine als ein Winkelschleifer, als ein Bohrer, als ein Sauger, als ein Schrauber o. dgl. ausgebildet. Insbesondere ist die Antriebseinheit als ein Motor, insbesondere ein Elektromotor, ausgebildet. Vorzugsweise sind/ist die Antriebseinheit, die Elektronikeinheit und/oder die Fluidkühlungseinheit, insbesondere mit Ausnahme von der Einsaugöffnung und/oder der Auslassöffnung, zumindest im Wesentlichen vollständig innerhalb der Gehäuseeinheit angeordnet. Bevorzugt ist die Elektronikeinheit zumindest zu einer Steuerung und/oder zu einer Versorgung der Antriebseinheit vorgesehen. Unter einer "Elektronikeinheit" soll insbesondere eine Einheit mit einer Prozessoreinheit und mit einer Speichereinheit sowie mit einem in der Speichereinheit gespeicherten Betriebsprogramm verstanden werden. Es ist auch denkbar, dass die Elektronikeinheit zu einer Steuerung und/oder zu einer Versorgung anderer Komponenten der Werkzeugmaschine, wie beispielsweise Anzeigeelementen, Schnittstellen o. dgl., vorgesehen ist. Besonders bevorzugt ist die Antriebseinheit als ein bürstenloser Wechsel- oder Gleichstrommotor ausgebildet, wobei insbesondere die Elektronikeinheit, insbesondere zusätzlich, zu einer Kommutierung der Antriebseinheit vorgesehen ist. Bevorzugt umfasst die Elektronikeinheit zumindest eine Leiterplatte, auf der insbesondere die Prozessoreinheit und/oder die Speichereinheit angeordnet sind.

Durch die erfindungsgemäße Ausgestaltung der Elektronikvorrichtung kann eine Verschmutzung der durch das Fluid gekühlten Elektronikeinheit durch Fremdkörper im Fluid vorteilhaft verhindert werden. Es können ungewollte Kontaktfehler und/oder Kurzschlüsse innerhalb der Elektronikeinheit vorteilhaft verhindert werden. Es kann eine vorteilhaft hohe Langlebigkeit der Elektronikeinheit erreicht werden. Es kann vorteilhaft ein fehlerfreier Betrieb der Werkzeugmaschine in stark verschmutzten Bereichen und/oder bei einer hohen Staubentstehung ermöglicht werden.

Des Weiteren wird vorgeschlagen, dass die Fluidkühlungseinheit zumindest ein Fluidkühlungselement umfasst, an dem die Elektronikeinheit zumindest teilweise anliegt. Es kann eine vorteilhaft effektive Kühlung der Elektronikeinheit ermöglicht werden, insbesondere da über einen Formschluss vorteilhaft viel Wärme der Elektronikeinheit an das Fluidkühlungselement abgeführt werden kann. Bevorzugt umfasst die Elektronikeinheit zumindest ein Wärmediffusionselement zu einer Abfuhr von Wärme. Vorzugsweise ist das Wärmediffusionselement dazu vorgesehen, insbesondere bei einem Betrieb der Elektronikeinheit entstehende, Wärme zu sammeln und/oder an das Fluidkühlungselement zu übertragen. Vorzugsweise weist die Elektronikeinheit, insbesondere das Wärmediffusionselement, zumindest eine Auflagefläche auf. Insbesondere liegt die Elektronikeinheit, insbesondere das Wärmediffusionselement, über die Auflagefläche an dem Fluidkühlungselement an. Bevorzugt ist das Wärmediffusionselement zumindest teilweise, insbesondere zumindest größtenteils, aus einem Material ausgebildet, das eine Wärmeleitfähigkeit von mindestens 10 W/(m·K) , vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist. Bevorzugt ist das Wärmediffusionselement an der Leiterplatte angeordnet. Insbesondere ist das Wärmediffusionselement als eine Wärmesenke ausgebildet, beispielsweise als eine Kupferstruktur o. dgl. Vorzugsweise ist die Auflagefläche als eine ebene Fläche ausgebildet. Es ist aber auch denkbar, dass die Auflagefläche zumindest teilweise gebogen ausgebildet ist.

Zudem wird vorgeschlagen, dass das Fluidkühlungselement als ein Kanalelement zu einer Leitung des Fluids ausgebildet ist, wobei die Elektronikeinheit zumindest teilweise an einer Außenwand des Fluidkühlungselements anliegt. Es kann eine vorteilhaft effektive indirekte Kühlung der Elektronikeinheit durch das Fluid ermöglicht werden, wobei insbesondere über einen Formschluss vorteilhaft viel Wärme der Elektronikeinheit an das Fluidkühlungselement abgeführt werden kann. Vorzugsweise liegt die Auflagefläche an der Außenwand des Fluidkühlungselements an. Bevorzugt liegt das Wärmediffusionselement über eine Seite, an der die Auflagefläche angeordnet ist, vollflächig an dem Fluidkühlungselement an. Bevorzugt begrenzt ein Kanalelement, insbesondere das als Kanalelement ausgebildete Fluidkühlungselement, zumindest einen Fluidkanal, in dem das Fluid geleitet wird. Beispielsweise ist das Fluidkühlungselement derart ausgebildet, dass der Fluidkanal eine zylindrische, kubische und/oder N-eckige Form aufweist.

Ferner wird vorgeschlagen, dass das Fluidkühlungselement zumindest einen Fluidkanal zu einer Leitung des Fluids begrenzt, welcher eine zumindest im Wesentlichen runde Querschnittsfläche aufweist. Es kann eine vorteilhaft laminare Strömung des Fluids innerhalb des Fluidkühlungselements ermöglicht werden. Dadurch kann eine vorteilhaft schnelle Abfuhr von Wärme der Elektronikeinheit durch das Fluidkühlungselement ermöglicht werden. Vorzugsweise ist die Querschnittsfläche des Fluidkühlungselements zumindest im Wesentlichen senkrecht zu einer Mittelachse und/oder einer Haupterstreckungsrichtung des Fluidkühlungselements ausgerichtet. Unter "im Wesentlichen senkrecht" soll insbesondere eine Ausrichtung einer Richtung, insbesondere einer entlang der Querschnittsfläche verlaufenden Richtung, relativ zu einer Bezugsrichtung, insbesondere einer entlang der Mittelachse und/oder der Haupterstreckungsrichtung des Fluidkühlungselements verlaufenden Richtung, verstanden werden, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Bevorzugt ist die Querschnittsfläche des Fluidkanals zumindest im Wesentlichen senkrecht zur Auflagefläche und/oder der Außenwand des Fluidkühlungselements ausgerichtet. Besonders bevorzugt weist die Querschnittsfläche des Fluidkanals eine Kontur auf, die zumindest im Wesentlichen kreisförmig oder ellipsenförmig ausgebildet ist. Vorzugsweise ist die Querschnittsfläche des Fluidkanals zumindest im Wesentlichen senkrecht zu einer Leitungsrichtung des Fluids durch das Fluidkühlungselement ausgerichtet. Bevorzugt beträgt ein maximaler Wert der Querschnittsfläche des vom Fluidkühlungselement begrenzten Fluidkanals mindestens 100 mm², vorzugsweise mindestens 200 mm², bevorzugt mindestens 400 mm² und besonders bevorzugt mindestens 600 mm².

Des Weiteren wird vorgeschlagen, dass das Fluidkühlungselement an der Außenwand zumindest eine Anlagefläche aufweist, die zumindest im Wesentlichen zumindest einer, insbesondere der vorher genannten, Auflagefläche der Elektronikeinheit entspricht, wobei die Elektronikeinheit über die Auflagefläche an der Anlagefläche des Fluidkühlungselements anliegt. Es kann eine vorteilhaft große Fläche zur Wärmeübertragung von der Elektronikeinheit auf das Fluidkühlungselement ermöglicht werden. Es kann eine vorteilhaft effektive Kühlung der Elektronikeinheit erreicht werden. Vorzugsweise sind die Anlagefläche und die Auflagefläche als ebene Flächen ausgebildet. Es ist aber auch denkbar, dass die Anlagefläche und die Auflagefläche als zumindest teilweise gebogene Flächen ausgebildet sind. Beispielsweise ist denkbar, dass die Elektronikeinheit das Fluidkühlungselement zumindest teilweise, insbesondere zumindest größtenteils, umschließt. Bevorzugterweise weisen/weist die Anlagefläche und/oder die Auflagefläche eine maximale Fläche von mindestens 100 mm², vorzugsweise mindestens 200 mm², bevorzugt mindestens 400 mm² und besonders bevorzugt mindestens 600 mm², auf. Bevorzugterweise weisen/weist die Anlagefläche und/oder die Auflagefläche eine maximale Fläche von höchstens 5000 mm², vorzugsweise höchstens 3000 mm² und besonders bevorzugt höchstens 2000 mm², auf.

Zudem wird vorgeschlagen, dass das Fluidkühlungselement zumindest teilweise, insbesondere zumindest in einem Bereich, an dem die Elektronikeinheit anliegt, aus einem Material ausgebildet ist, das eine Wärmeleitfähigkeit von mindestens 10 W/(m·K), vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist. Es kann eine vorteilhaft effektive beziehungsweise schnelle Abfuhr von Wärme der Elektronikeinheit über das Fluidkühlungselement ermöglicht werden. Es kann eine vorteilhaft effektive Kühlung der Elektronikeinheit erreicht werden. Es können ungewollte Schäden durch Hitzeentwicklung an der Elektronikeinheit und/oder dem Fluidkühlungselement vorteilhaft verhindert werden. Bevorzugt ist das Fluidkühlungselement zumindest im Wesentlichen vollständig aus einem Material ausgebildet ist, das eine Wärmeleitfähigkeit von mindestens 10 W/(m·K), vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist.

Vorzugsweise ist das Fluidkühlungselement aus einem metallischen Material, insbesondere aus Aluminium, ausgebildet. Es ist denkbar, dass das Fluidkühlungselement lediglich in einem Bereich, innerhalb dessen die Elektronikeinheit an dem Fluidkühlungselement anliegt, aus einem Material ausgebildet ist, das eine Wärmeleitfähigkeit von mindestens 10 W/(m·K), vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist.

Ferner wird vorgeschlagen, dass die Fluidkühlungseinheit zumindest ein Fluidkühlungselement umfasst, wobei sich der Fluidströmungspfad zumindest in einem Nahbereich der Elektronikeinheit zumindest im Wesentlichen vollständig innerhalb des Fluidkühlungselements erstreckt. Es kann eine vorteilhaft kompakte Bauweise der Werkzeugmaschine, insbesondere der Fluidkühlungseinheit, ermöglicht werden. Es kann eine vorteilhaft effektive Kühlung der Elektronikeinheit erreicht werden, insbesondere da ein gesamtes Volumen eines angesaugten Fluids zur Kühlung der Elektronikeinheit mittels des Fluidkühlungselements verwendet werden kann. Insbesondere ist das Fluidkühlungselement dazu vorgesehen, insbesondere in dem Nahbereich der Elektronikeinheit, einen gesamten Fluidstrom, welcher insbesondere über die Einsaugöffnung in die Fluidkühlungseinheit strömt, zu leiten. Bevorzugt verläuft der Fluidströmungspfad, insbesondere in dem Nahbereich der Elektronikeinheit, zumindest im Wesentlichen vollständig durch das Fluidkühlungselement, insbesondere den Fluidkanal. Alternativ ist denkbar, dass das Fluidkühlungselement zumindest, insbesondere genau, zwei Fluidkanäle begrenzt, wobei der Fluidströmungspfad, insbesondere in dem Nahbereich der Elektronikeinheit, zumindest im Wesentlichen vollständig durch das Fluidkühlungselement, insbesondere die Fluidkanäle, verläuft. Der Nahbereich der Elektronikeinheit erstreckt sich insbesondere entlang einer Haupterstreckungsrichtung der Fluidkühlungseinheit, insbesondere des Fluidkühlungselements, zumindest über eine vollständige Länge der Elektronikeinheit.

Des Weiteren wird vorgeschlagen, dass die Elektronikvorrichtung zumindest eine Dichtungseinheit umfasst, die dazu vorgesehen ist, die Elektronikeinheit zusammen mit der Fluidkühlungseinheit zumindest teilweise, insbesondere gegenüber dem Fluidströmungspfad, zumindest im Wesentlichen luftdicht und/oder wasserdicht zu verschließen. Es kann ein vorteilhaft hoher Schutz der Elektronikeinheit vor Verschmutzung und/oder Abrieb durch in dem Fluid enthaltene Fremdkörper ermöglicht werden. Es kann ein vorteilhaft hoher Anteil an Wärme der Elektronikeinheit über das Fluidkühlungselement abgeführt werden. Dadurch kann eine ungewollte Wärmeentwicklung in einem Bereich um die Elektronikeinheit vorteilhaft verhindert werden. Vorzugsweise weist die Dichtungseinheit zumindest ein Dichtungselement auf. Es ist denkbar, dass das Dichtungselement zumindest teilweise, insbesondere zumindest größtenteils, aus einem wärmeleitfähigen Material ausgebildet ist, das insbesondere eine Wärmeleitfähigkeit von mindestens 10 W/(m·K), vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist. Alternativ ist denkbar, dass das Dichtungselement aus einem wärmeisolierenden Material, wie beispielsweise Gummi o. dgl., ausgebildet ist. Bevorzugt liegt das Dichtungselement zumindest teilweise an der Fluidkühlungseinheit, insbesondere dem Fluidkühlungselement, und/oder dem Wärmediffusionselement an. Insbesondere umschließt das Dichtungselement die Elektronikeinheit zusammen mit dem Fluidkühlungselement und/oder dem Wärmediffusionselement zumindest im Wesentlichen vollständig. Es ist denkbar, dass ein zwischen dem Dichtungselement und der Elektronikeinheit beziehungsweise dem Fluidkühlungselement und/oder dem Wärmediffusionselement eingeschlossenes Volumen mit einem wärmeisolierenden Gas gefüllt oder evakuiert ist. Insbesondere weist das evakuierte Volumen einen maximalen Druck von insbesondere weniger als 1000 mbar, vorzugsweise weniger als 300 mbar, bevorzugt weniger als 1 mbar und besonders bevorzugt weniger als 10⁻² mbar, auf. Insbesondere in einer Ausgestaltung, in der das Dichtungselement aus einem wärmeisolierenden Material ausgebildet ist, liegt das Dichtungselement vorzugweise flächig an der Elektronikeinheit an.

Außerdem wird eine Werkzeugmaschine, insbesondere eine handgeführte Werkzeugmaschine, mit zumindest einer erfindungsgemäßen Elektronikvorrichtung vorgeschlagen.

Durch die erfindungsgemäße Ausgestaltung der Werkzeugmaschine kann eine Verschmutzung der durch das Fluid gekühlten Elektronikeinheit und/oder Bauteilen innerhalb der Gehäuseeinheit durch Fremdkörper im Fluid vorteilhaft verhindert werden. Es können ungewollte Kontaktfehler und/oder Kurzschlüsse innerhalb der Elektronikeinheit vorteilhaft verhindert werden. Es kann eine vorteilhaft hohe Langlebigkeit der Werkzeugmaschine erreicht werden. Es kann vorteilhaft ein fehlerfreier Betrieb der Werkzeugmaschine in stark verschmutzten Bereichen und/oder bei einer hohen Staubentstehung ermöglicht werden.

Zudem wird vorgeschlagen, dass die Werkzeugmaschine zumindest eine Antriebseinheit umfasst, wobei die Fluidkühlungseinheit zu einer Kühlung der Antriebseinheit vorgesehen ist. Es kann eine vorteilhaft kompakte Bauweise der Werkzeugmaschine ermöglicht werden. Vorzugsweise ist die Antriebseinheit von der Einsaugöffnung aus betrachtet, insbesondere fluidtechnisch, hinter der Elektronikeinheit und/oder dem Fluidkühlungselement angeordnet. Es ist denkbar, dass die Werkzeugmaschine eine Abscheideeinheit zu einer Teilung des Fluidstroms in Abhängigkeit von einer Fremdkörperdichte in zumindest zwei Teilströme umfasst. Insbesondere ist die Abscheideeinheit von der Einsaugöffnung aus betrachtet, insbesondere fluidtechnisch, hinter der Elektronikeinheit und/oder dem Fluidkühlungselement und vor der Antriebseinheit angeordnet.

Die erfindungsgemäße Elektronikvorrichtung und/oder die erfindungsgemäße Werkzeugmaschine sollen/soll hierbei nicht auf die oben beschriebene Anwendung und Ausführungsform beschränkt sein. Insbesondere können/kann die erfindungsgemäße Elektronikvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht eines Längsschnitts einer erfindungsgemäßen Werkzeugmaschine mit einer Elektronikvorrichtung und einer Fluidkühlungseinheit,
- Fig. 2: eine schematische Darstellung einer Abscheideeinheit der erfindungsgemäßen Werkzeugmaschine,
- Fig. 3: eine perspektivische Ansicht eines Förderelements einer Fördereinheit der erfindungsgemäßen Werkzeugmaschine zum Fördern eines Fluids,
- Fig. 4: eine schematische Darstellung eines Querschnitts der Elektronikvorrichtung mit einem runden Fluidkanal,
- Fig. 5: eine schematische Darstellung eines beispielhaften Ablaufs eines erfindungsgemäßen Verfahrens zu einem Kühlen einer Antriebseinheit der erfindungsgemäßen Werkzeugmaschine,
- Fig. 6: eine schematische Darstellung einer alternativen Ausgestaltung einer Abscheideeinheit einer erfindungsgemäßen Werkzeugmaschine,
- Fig. 7: eine Seitenansicht eines Längsschnitts einer alternativen Ausgestaltung einer erfindungsgemäßen Werkzeugmaschine mit einer Elektronikvorrichtung und einem schraubenförmigen Abscheideelement einer Abscheideeinheit der Werkzeugmaschine,
- Fig. 8: eine Seitenansicht eines Längsschnitts einer weiteren alternativen Ausgestaltung einer erfindungsgemäßen Werkzeugmaschine mit einer Elektronikvorrichtung,
- Fig. 9: eine schematische Darstellung eines Querschnitts einer alternativen Ausgestaltung eines Fluidkühlungselements einer Fluidkühlungseinheit einer erfindungsgemäßen Werkzeugmaschine mit einem eckigen Fluidkanal,
- Fig. 10: eine Seitenansicht eines Längsschnitts einer anderen alternativen Ausgestaltung einer erfindungsgemäßen Werkzeugmaschine mit einer Elektronikvorrichtung und einer Fluidkühlungseinheit mit mehreren Einlassöffnungen und
- Fig. 11: eine Seitenansicht eines Längsschnitts einer weiteren anderen alternativen Ausgestaltung einer erfindungsgemäßen Werkzeugmaschine mit einer Elektronikvorrichtung und einer Fluidkühlungseinheit mit mehreren seitlichen Einlassöffnungen.

### Beschreibung der Ausführungsbeispiele

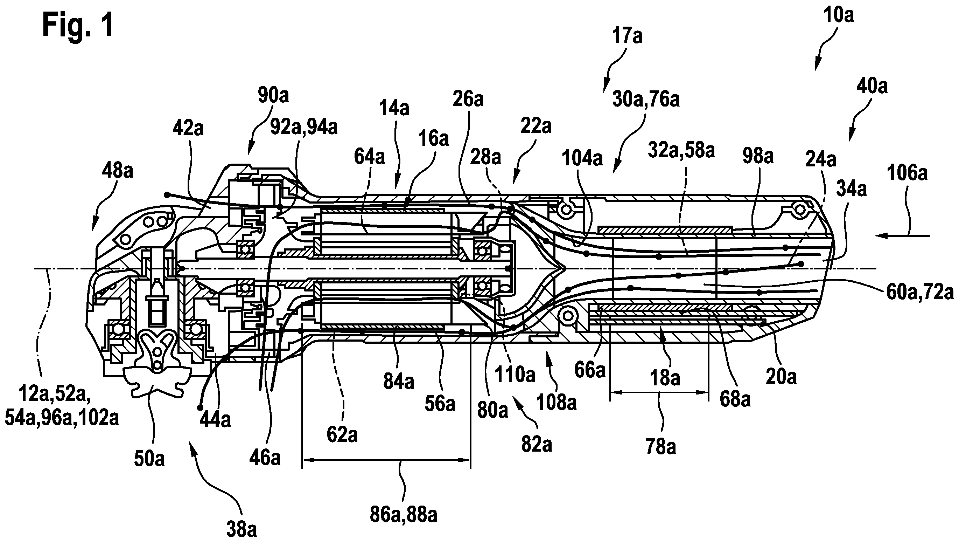

In Figur 1 ist eine Seitenansicht einer Werkzeugmaschine 10a gezeigt, wobei die Werkzeugmaschine 10a entlang einer Ebene durch eine Längsachse 12a der Werkzeugmaschine 10a geschnitten gezeigt ist. Die Werkzeugmaschine 10a ist als eine handgeführte Werkzeugmaschine ausgebildet. Die Werkzeugmaschine 10a ist als eine Elektrowerkzeugmaschine ausgebildet. Die Werkzeugmaschine 10a ist als ein Winkelschleifer ausgebildet. Es sind aber auch andere Ausgestaltungen der Werkzeugmaschine 10a denkbar, beispielsweise als ein Bohrer, als ein Schrauber, als ein Hammer, als ein Sauger o. dgl. Die Werkzeugmaschine 10a weist eine Gehäuseeinheit 14a auf. Die Werkzeugmaschine 10a weist eine innerhalb der Gehäuseeinheit 14a angeordnete Antriebseinheit 16a auf, die insbesondere als bürstenloser Gleichstrommotor ausgebildet ist. Es sind aber auch andere Ausgestaltungen der Antriebseinheit 16a denkbar, beispielsweise als ein Universalmotor. Die Werkzeugmaschine 10a umfasst eine Elektronikvorrichtung 17a. Die Werkzeugmaschine 10a weist eine Elektronikeinheit 18a auf, die zumindest zu einer Steuerung und einer elektrischen Versorgung der Antriebseinheit 16a vorgesehen ist und insbesondere als Teil der Elektronikvorrichtung 17a ausgebildet ist. Es ist auch denkbar, dass die Elektronikeinheit 18a zu einer Steuerung und/oder zu einer Versorgung anderer Komponenten der Werkzeugmaschine 10a, wie beispielsweise Anzeigeelementen, Schnittstellen o. dgl., vorgesehen ist. Die Elektronikeinheit 18a ist zu einer Kommutierung der Antriebseinheit 16a vorgesehen. Die Elektronikeinheit 18a umfasst eine Leiterplatte 20a, auf der insbesondere eine Prozessoreinheit und eine Speichereinheit angeordnet sind, welche insbesondere in der Figur 1 nicht gezeigt sind. Die Werkzeugmaschine 10a weist eine Abscheideeinheit 22a auf, die dazu vorgesehen ist, zumindest einen durch die Gehäuseeinheit 14a geleiteten Fluidstrom 24a, insbesondere in Abhängigkeit von einer Fremdkörperdichte, in zumindest zwei Teilströme 26a, 28a zu teilen, wobei ein Teilstrom 26a der Teilströme 26a, 28a im Vergleich zu einem anderen Teilstrom 28a der Teilströme 26a, 28a eine höhere Fremdkörperdichte aufweist. Die Werkzeugmaschine 10a weist eine Fluidkühlungseinheit 30a auf, die dazu vorgesehen ist, die Antriebseinheit 16a mittels der zumindest zwei Teilströme 26a, 28a zu kühlen. Die Fluidkühlungseinheit 30a ist als Teil der Elektronikvorrichtung 17a ausgebildet. Die Fluidkühlungseinheit 30a ist zu einer Kühlung der Elektronikeinheit 18a mittels eines Fluids beziehungsweise des Fluidstroms 24a vorgesehen. Die Elektronikeinheit 18a ist zumindest größtenteils, insbesondere vollständig, außerhalb eines Fluidströmungspfads 32a der Fluidkühlungseinheit 30a angeordnet. Die Fluidkühlungseinheit 30a ist zu einer Kühlung der Antriebseinheit 16a und der Elektronikeinheit 18a vorgesehen. Die Fluidkühlungseinheit 30a ist dazu vorgesehen, das Fluid beziehungsweise den Fluidstrom 24a durch die Gehäuseeinheit 14a zu leiten.

Die Fluidkühlungseinheit 30a umfasst eine Einsaugöffnung 34a zu einem Einsaugen des Fluids beziehungsweise des Fluidstroms 24a. Die Einsaugöffnung 34a ist durch die Gehäuseeinheit 14a begrenzt und an einer einem Bearbeitungsbereich 38a der Werkzeugmaschine 10a abgewandten Seite der Werkzeugmaschine 10a, insbesondere der Gehäuseeinheit 14a, angeordnet. Die Einsaugöffnung 34a ist entlang der Längsachse 12a der Werkzeugmaschine 10a ausgebildet, insbesondere an einem entlang der Längsachse 12a der Werkzeugmaschine 10a ausgebildeten und dem Bearbeitungsbereich 38a zumindest teilweise abgewandten Endbereich 40a der Werkzeugmaschine 10a. Die Fluidkühlungseinheit 30a umfasst eine Vielzahl von Auslassöffnungen 42a, 44a, 46a zu einem Ablassen des Fluids beziehungsweise des Fluidstroms 24a aus der Werkzeugmaschine 10a. Die Auslassöffnungen 42a, 44a, 46a sind in einem der Einsaugöffnung 34a abgewandten Endbereich 48a der Werkzeugmaschine 10a angeordnet. Die Auslassöffnungen 42a, 44a, 46a sind in einem Bereich um einen Werkzeughalter 50a der Werkzeugmaschine 10a angeordnet. Eine Auslassöffnung 42a der Vielzahl an Auslassöffnungen 42a, 44a, 46a ist an einer dem Bearbeitungsbereich 38a abgewandten Seite der Werkzeugmaschine 10a, insbesondere der Gehäuseeinheit 14a, angeordnet. Zwei Auslassöffnungen 44a, 46a der Vielzahl an Auslassöffnungen 42a, 44a, 46a sind an einer dem Bearbeitungsbereich 38a zugewandten Seite der Werkzeugmaschine 10a, insbesondere der Gehäuseeinheit 14a, angeordnet. Eine Auslassöffnung 44a der zwei Auslassöffnungen 44a, 46a ist zu einem Ableiten des Teilstroms 26a vorgesehen. Eine andere Auslassöffnung 46a der zwei Auslassöffnungen 44a, 46a ist zu einem Ableiten des anderen Teilstroms 28a vorgesehen.

Die Antriebseinheit 16a weist eine Antriebsachse 52a auf, um die ein Rotor der Antriebseinheit 16a angetrieben wird. Die Antriebsachse 52a der Antriebseinheit 16a ist zumindest im Wesentlichen parallel zur Längsachse 12a der Werkzeugmaschine 10a ausgerichtet. Die Antriebsachse 52a der Antriebseinheit 16a ist koaxial zu einer Haupterstreckungsrichtung 54a der Fluidkühlungseinheit 30a ausgerichtet. Die Fluidkühlungseinheit 30a umfasst ein Kanalelement, insbesondere ein Fluidkühlungselement 66a, wobei der Fluidströmungspfad 32a, insbesondere in einem Bereich, in dem die Elektronikeinheit 18a angeordnet ist, zumindest größtenteils durch das Kanalelement verläuft. Der Fluidströmungspfad 32a erstreckt sich von der Einsaugöffnung 34a der Fluidkühlungseinheit 30a bis zu den Auslassöffnungen 42a, 44a, 46a der Fluidkühlungseinheit 30a. Die Fluidkühlungseinheit 30a weist eine Führungsstrecke 58a auf, entlang derer der Fluidströmungspfad 32a ausgebildet ist. Insbesondere ist die Führungsstrecke 58a entlang einer Haupterstreckungsrichtung 54a des Fluidströmungspfads 32a ausgebildet. Die Elektronikeinheit 18a ist zumindest größtenteils, insbesondere vollständig, außerhalb einer von der Fluidkühlungseinheit 30a umschlossenen Strömungsausnehmung 60a zur Leitung des Fluids beziehungsweise des Fluidstroms 24a angeordnet. Die Fluidkühlungseinheit 30a ist derart ausgebildet und/oder die Elektronikeinheit 18a derart angeordnet, dass die Elektronikeinheit 18a, insbesondere über ein Kanalelement, insbesondere das Fluidkühlungselement 66a, der Fluidkühlungseinheit 30a, beabstandet von dem Fluidströmungspfad 32a und/oder der von der Fluidkühlungseinheit 30a umschlossenen Strömungsausnehmung 60a angeordnet ist. Die Fluidkühlungseinheit 30a ist dazu vorgesehen, den Fluidstrom 24a über die Einsaugöffnung 34a durch das Kanalelement, insbesondere das Fluidkühlungselement 66a, an der Elektronikeinheit 18a und der Antriebseinheit 16a vorbei zu den Auslassöffnungen 42a, 44a, 46a zu leiten. Das Kanalelement, insbesondere das Fluidkühlungselement 66a, ist zumindest im Wesentlichen vollständig innerhalb der Gehäuseeinheit 14a angeordnet. Die Antriebseinheit 16a, die Elektronikeinheit 18a und die Fluidkühlungseinheit 30a sind, insbesondere mit Ausnahme von der Einsaugöffnung 34a und/oder den Auslassöffnungen 42a, 44a, 46a, zumindest im Wesentlichen vollständig innerhalb der Gehäuseeinheit 14a angeordnet.

Das über die Einsaugöffnung 34a angesaugte Fluid beziehungsweise der Fluidstrom 24a umfasst eine Vielzahl von Fremdkörpern. Insbesondere sind die Fremdkörper im Fluidstrom 24a und/oder den Teilströmen 26a, 28a als Staubteilchen, als Rückstände von einem bearbeiteten Werkstück, wie beispielsweise Metallspäne, als Verunreinigungen in dem Fluidstrom 24a o. dgl. ausgebildet. Das Fluid beziehungsweise der Fluidstrom 24a sind/ist zumindest teilweise, insbesondere zumindest größtenteils, aus Luft ausgebildet. Die Fluidkühlungseinheit 30a ist derart ausgebildet, dass bei einem Kühlen der Antriebseinheit 16a mittels der Teilströme 26a, 28a, insbesondere des Teilstroms 26a und des weiteren Teilstroms 28a, Wärmeenergie von der Antriebseinheit 16a auf die Teilströme 26a, 28a übertragen wird. Die Fluidkühlungseinheit 30a ist dazu vorgesehen, die auf die Teilströme 26a, 28a, insbesondere den Teilstrom 26a beziehungsweise den anderen Teilstrom 28a, übertragene Wärme über die Teilströme 26a, 28a aus der Werkzeugmaschine 10a, insbesondere der Gehäuseeinheit 14a, zu leiten. Die Fluidkühlungseinheit 30a ist dazu vorgesehen, den Fluidstrom 24a über die Einsaugöffnung 34a durch zumindest ein Kanalelement, insbesondere das Fluidkühlungselement 66a, der Fluidkühlungseinheit an die Abscheideeinheit 22a zu leiten. Die Abscheideeinheit 22a und die Fluidkühlungseinheit 30a sind einstückig ausgebildet, wobei insbesondere das Kanalelement, insbesondere das Fluidkühlungselement 66a, der Fluidkühlungseinheit 30a dazu vorgesehen ist, den Fluidstrom 24a auf der Führungsstrecke 58a und/oder auf Teilführungsstrecken 62a, 64a des Teilstroms 28a beziehungsweise des anderen Teilstroms 28a zu begrenzen. Die Fluidkühlungseinheit 30a ist dazu vorgesehen, die Teilströme 26a, 28a nach einem Durchfließen der Abscheideeinheit 22a zu einem Kühlen der Antriebseinheit 16a zumindest teilweise in Richtung der Antriebseinheit 16a zu leiten.

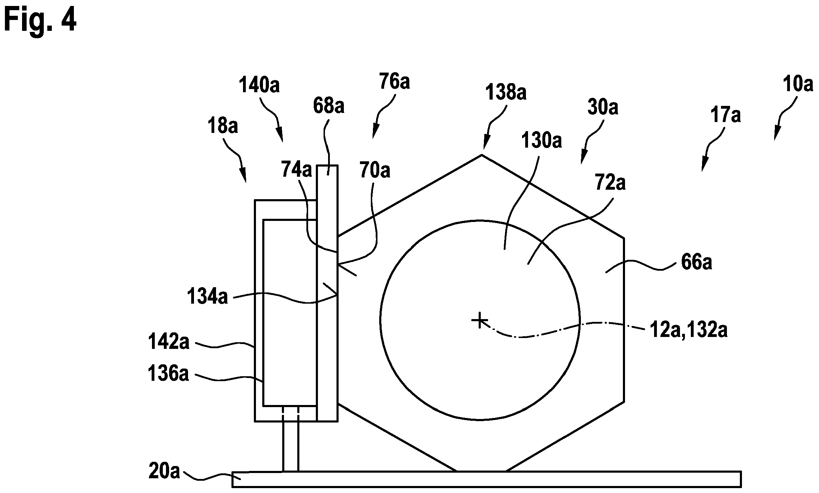

Die Fluidkühlungseinheit 30a umfasst das Fluidkühlungselement 66a, an dem die Elektronikeinheit 18a zumindest teilweise anliegt. Die Elektronikeinheit 18a umfasst ein Wärmediffusionselement 68a zu einer Abfuhr von Wärme. Das Wärmediffusionselement 68a ist als ein Kupferblock ausgebildet und dazu vorgesehen, insbesondere bei einem Betrieb der Elektronikeinheit 18a entstehende, Wärme zu sammeln und/oder an das Fluidkühlungselement 66a zu übertragen. Die Elektronikeinheit 18a, insbesondere das Wärmediffusionselement 68a, weist zumindest eine Auflagefläche 70a auf (siehe Figur 4). Die Elektronikeinheit 18a, insbesondere das Wärmediffusionselement 68a, liegt über die Auflagefläche 70a an dem Fluidkühlungselement 66a an. Das Wärmediffusionselement 68a ist aus einem Material ausgebildet, das eine Wärmeleitfähigkeit von mindestens 10 W/(m·K) , vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist. Das Wärmediffusionselement 68a ist an der Leiterplatte 20a angeordnet. Die Auflagefläche 70a ist als eine ebene Fläche ausgebildet. Es ist aber auch denkbar, dass die Auflagefläche 70a zumindest teilweise gebogen ausgebildet ist. Das Fluidkühlungselement 66a begrenzt einen Fluidkanal 72a. Das Fluid beziehungsweise der Fluidstrom 24a wird durch den Fluidkanal 72a beziehungsweise das Fluidkühlungselement 66a an der Elektronikeinheit 18a vorbei geleitet. Das Fluidkühlungselement 66a ist derart ausgebildet, dass der Fluidkanal 72a eine zylindrische Form aufweist. Das Fluidkühlungselement 66a ist als ein Kanalelement zu einer Leitung des Fluids beziehungsweise des Fluidstroms 24a ausgebildet, wobei die Elektronikeinheit 18a zumindest teilweise an einer Außenwand 74a des Fluidkühlungselements 66a anliegt (siehe Figur 4). Die Auflagefläche 70a liegt an der Außenwand 74a des Fluidkühlungselements 66a an. Das Wärmediffusionselement 68a liegt über eine Seite, an der die Auflagefläche 70a angeordnet ist, vollflächig an dem Fluidkühlungselement 66a an. Das Fluidkühlungselement 66a ist zumindest in einem Bereich, an dem die Elektronikeinheit 18a anliegt, aus einem Material ausgebildet, das eine Wärmeleitfähigkeit von mindestens 10 W/(m·K), vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist. Das Fluidkühlungselement 66a ist aus Aluminium ausgebildet. Es ist aber auch denkbar, dass das Fluidkühlungselement 66a aus einem anderen wärmeleitenden, insbesondere metallischen, Material ausgebildet ist.

Der Fluidströmungspfad 32a erstreckt sich in einem Nahbereich 76a der Elektronikeinheit 18a zumindest im Wesentlichen vollständig innerhalb des Fluidkühlungselements 66a. Das Fluidkühlungselement 66a ist dazu vorgesehen, insbesondere in dem Nahbereich 76a der Elektronikeinheit 18a, einen gesamten Fluidstrom 24a, welcher insbesondere über die Einsaugöffnung 34a in die Fluidkühlungseinheit 30a strömt, zu leiten. Der Fluidströmungspfad 32a verläuft, insbesondere in dem Nahbereich 76a der Elektronikeinheit 18a, zumindest im Wesentlichen vollständig durch das Fluidkühlungselement 66a, insbesondere den Fluidkanal 72a. Alternativ ist denkbar, dass das Fluidkühlungselement 66a zumindest, insbesondere genau, zwei Fluidkanäle 72a begrenzt, wobei der Fluidströmungspfad 32a, insbesondere in dem Nahbereich 76a der Elektronikeinheit 18a, zumindest im Wesentlichen vollständig durch das Fluidkühlungselement 66a, insbesondere die Fluidkanäle 72a verläuft. Der Nahbereich 76a der Elektronikeinheit 18a erstreckt sich entlang der Haupterstreckungsrichtung 54a der Fluidkühlungseinheit 30a, insbesondere des Fluidkühlungselements 66a, zumindest über eine vollständige Länge 78a der Elektronikeinheit 18a. Die Antriebseinheit 16a ist von der Einsaugöffnung 34a aus betrachtet, insbesondere fluidtechnisch, hinter der Elektronikeinheit 18a und dem Fluidkühlungselement 66a angeordnet. Die Abscheideeinheit 22a ist von der Einsaugöffnung 34a aus betrachtet, insbesondere fluidtechnisch, hinter der Elektronikeinheit 18a und dem Fluidkühlungselement 66a und vor der Antriebseinheit 16a angeordnet.

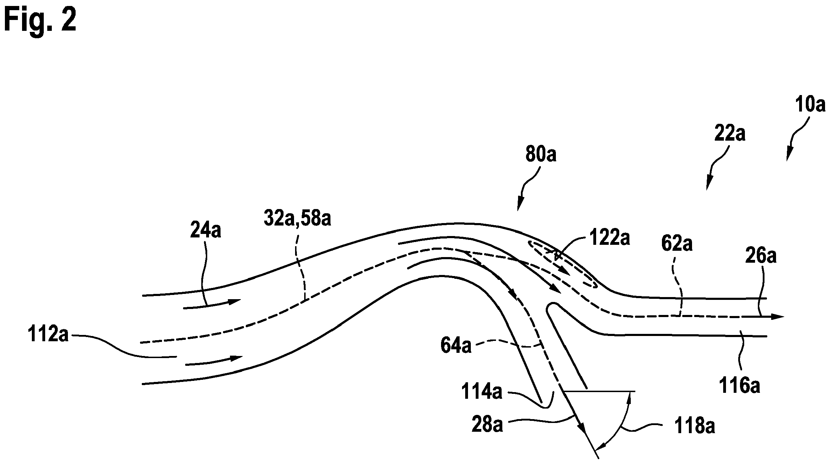

Die Abscheideeinheit 22a umfasst ein als Kanalelement ausgebildetes Abscheideelement 80a, das in einem Nahbereich 82a der Antriebseinheit 16a angeordnet ist und dazu vorgesehen ist, den Fluidstrom 24a zu teilen. Das Abscheideelement 80a ist dazu vorgesehen, den Fluidstrom 24a auf der Führungsstrecke 58a zu leiten und in den Teilstrom 26a und den anderen Teilstrom 28a zu teilen. Das Abscheideelement 80a ist als ein passives Element ausgebildet, wobei insbesondere das Abscheideelement 80a dazu vorgesehen ist, den Fluidstrom 24a über eine Form des Abscheideelements 80a, insbesondere bei einem Durchfließen des Fluidstroms 24a, zu teilen. Insbesondere ist das Abscheideelement 80a statisch beziehungsweise unbeweglich ausgebildet. Insbesondere wird das Abscheideelement 80a in der Beschreibung zu Figur 2 detailliert beschrieben. Die Abscheideeinheit 22a, insbesondere das Abscheideelement 80a, ist fluidtechnisch zwischen der Einsaugöffnung 34a und der Antriebseinheit 16a ausgebildet. Das im Nahbereich 82a der Antriebseinheit 16a angeordnete Abscheideelement 80a ist direkt an der Antriebseinheit 16a, insbesondere einem Gehäuse der Antriebseinheit 16a, angeordnet, insbesondere befestigt. Es ist denkbar, dass das im Nahbereich 82a der Antriebseinheit 16a angeordnete Abscheideelement 80a einstückig mit der Antriebseinheit 16a, insbesondere dem Gehäuse der Antriebseinheit 16a, ausgebildet ist.

Ein Kanalelement 56a der Fluidkühlungseinheit 30a ist dazu vorgesehen, den Teilstrom 26a, insbesondere getrennt von dem anderen Teilstrom 28a, zumindest teilweise an einer Außenwand 84a der Antriebseinheit 16a vorbei zu führen. Es ist auch denkbar, dass die Fluidkühlungseinheit 30a eine Vielzahl von Kanalelementen 56a umfasst, die zur Leitung des Teilstroms 26a vorgesehen sind, wobei insbesondere die Kanalelemente 56a um die Längsachse 12a verteilt um die Antriebseinheit 16a angeordnet sind. Die Abscheideeinheit 22a und die Fluidkühlungseinheit 30a sind derart ausgebildet, dass der Teilstrom 26a, insbesondere in einem Bereich entlang der Antriebseinheit 16a, zumindest größtenteils getrennt von dem anderen Teilstrom 28a durch die Gehäuseeinheit 14a geleitet wird. Die Fluidkühlungseinheit 30a ist dazu vorgesehen, den anderen Teilstrom 28a zum Kühlen der Antriebseinheit 16a in beziehungsweise durch die Antriebseinheit 16a zu leiten. Das Kanalelement 56a ist außerhalb der Antriebseinheit 16a an der Außenwand 84a der Antriebseinheit 16a angeordnet. Das Kanalelement 56a ist direkt an der Antriebseinheit 16a, insbesondere der Außenwand 84a der Antriebseinheit 16a, angeordnet. Das Kanalelement 56a liegt flächig an der Außenwand 84a der Antriebseinheit 16a an. Das Kanalelement 56a ist dazu vorgesehen, Wärme von der Antriebseinheit 16a, insbesondere der Außenwand 84a der Antriebseinheit 16a, auf den Teilstrom 26a zu übertragen, wobei insbesondere eine Kühlung der Antriebseinheit 16a durch den Teilstrom 26a erfolgt. Das Kanalelement 56a erstreckt sich entlang einer gesamten Länge 86a der Antriebseinheit 16a an der Außenwand 84a der Antriebseinheit 16a. Das Kanalelement 56a ist zumindest größtenteils aus einem wärmeleitenden Material ausgebildet, welches insbesondere eine Wärmeleitfähigkeit von insbesondere mindestens 10 W/(m·K), vorzugsweise mindestens 40 W/(m·K), bevorzugt mindestens 100 W/(m·K) und besonders bevorzugt mindestens 200 W/(m·K), aufweist. Das Kanalelement 56a ist, insbesondere entlang einer gesamten Länge 88a der Außenwand 74a der Antriebseinheit 16a, zumindest im Wesentlichen geradlinig ausgebildet. Insbesondere ist das Kanalelement 56a zumindest größtenteils zumindest im Wesentlichen parallel zur Außenwand 84a der Antriebseinheit 16a, insbesondere einer Außenfläche der Außenwand 84a der Antriebseinheit 16a, welche dem Kanalelement 56a zugewandt ist beziehungsweise zumindest teilweise am Kanalelement 56a anliegt, angeordnet.

Die Abscheideeinheit 22a umfasst eine Fördereinheit 90a, die zumindest teilweise innerhalb der Fluidkühlungseinheit 30a angeordnet ist und dazu vorgesehen ist, zumindest den Teilstrom 26a aus oder durch der/die Gehäuseeinheit 14a zu befördern. Die Fördereinheit 90a ist als eine Strömungspumpe ausgebildet. Die Fördereinheit 90a ist dazu vorgesehen, den Teilstrom 26a über die Fluidkühlungseinheit 30a, insbesondere durch die Einsaugöffnung 34a, anzusaugen. Die Fördereinheit 90a ist dazu vorgesehen, den Fluidstrom 24a, insbesondere entlang der Führungsstrecke 58a, durch die Abscheideeinheit 22a zu fördern und insbesondere mittels einer Fördergeschwindigkeit und dem Abscheideelement 80a, in die Teilströme 26a, 28a, insbesondere den Teilstrom 26a und den anderen Teilstrom 28a, zu teilen. Die Fördereinheit 90a ist dazu vorgesehen, die Teilströme 26a, 28a, insbesondere den Teilstrom 26a und den anderen Teilstrom 28a, insbesondere nach einem Kühlen der Antriebseinheit 16a, durch die Auslassöffnungen 42a, 44a, 46a aus der Werkzeugmaschine 10a, insbesondere der Gehäuseeinheit 14a, zu befördern. Die Fördereinheit 90a umfasst ein Förderelement 92a, das zumindest teilweise als ein Axiallüfter ausgebildet ist. Das Förderelement 92a ist einstückig mit einem Lüfterrad 94a der Antriebseinheit 16a ausgebildet. Das Förderelement 92a ist von der Einsaugöffnung 34a aus betrachtet fluidtechnisch hinter der Antriebseinheit 16a angeordnet. Die Fördereinheit 90a ist dazu vorgesehen, den Teilstrom 26a und den anderen Teilstrom 28a getrennt voneinander durch die Gehäuseeinheit 14a und/oder die Fluidkühlungseinheit 30a zu fördern. Die Fördereinheit 90a ist, insbesondere zusammen mit der Fluidkühlungseinheit 30a, dazu vorgesehen, die Teilströme 26a, 28a, insbesondere nach der Antriebseinheit 16a, jeweils in unterschiedliche Richtungen zu fördern, welche insbesondere von einer Antriebsachse 96a des Förderelements 92a radial nach außen gerichtet sind. Das Förderelement 92a ist, insbesondere fluidtechnisch, von der Einsaugöffnung 34a betrachtet, hinter der Antriebseinheit 16a angeordnet. Das Förderelement 92a ist dazu vorgesehen, den Teilstrom 26a, insbesondere in einem Nahbereich des Förderelements 92a, in eine zumindest im Wesentlichen parallel zur Antriebsachse 96a des Förderelements 92a ausgerichtete Richtung zu fördern. Das Förderelement 92a ist dazu vorgesehen, den anderen Teilstrom 28a, insbesondere in einem Nahbereich des Förderelements 92a, in eine zumindest im Wesentlichen senkrecht zur Antriebsachse 96a des Förderelements 92a ausgerichtete Richtung zu fördern. Die Fördereinheit 90a ist dazu vorgesehen, den Teilstrom 26a und den anderen Teilstrom 28a jeweils durch unterschiedlich ausgebildete und/oder beabstandet angeordnete Auslassöffnungen 42a, 44a, 46a der Fluidkühlungseinheit 30a aus der Werkzeugmaschine 10a beziehungsweise der Gehäuseeinheit 14a zu befördern. Die Fördereinheit 90a ist dazu vorgesehen, den Teilstrom 26a durch die Auslassöffnungen 42a, 44a, 46a zu fördern. Die Fördereinheit 90a ist dazu vorgesehen, den anderen Teilstrom 28a durch die Auslassöffnungen 42a, 44a, 46a zu fördern.

Die Fluidkühlungseinheit 30a umfasst ein Hauptkanalelement 98a zur Leitung des Fluidstroms 24a, das von der Einsaugöffnung 34a aus betrachtet, insbesondere entlang der Haupterstreckungsrichtung 54a der Fluidkühlungseinheit 30a betrachtet, vor der Antriebseinheit 16a angeordnet ist. Die Fluidkühlungseinheit 30a umfasst entlang der Haupterstreckungsrichtung 54a der Fluidkühlungseinheit 30a in einem Bereich des Hauptkanalelements 98a lediglich genau eine Führungsstrecke 58a, welche insbesondere innerhalb des Hauptkanalelements 98a angeordnet ist. Die Führungsstrecke 58a erstreckt sich von der Einsaugöffnung 34a durch die Fluidkühlungseinheit 30a bis zu den Auslassöffnungen 42a, 44a, 46a. Die Haupterstreckungsrichtung 54a der Fluidkühlungseinheit 30a ist zumindest im Wesentlichen parallel zu einer Haupterstreckungsrichtung 102a der Antriebseinheit 16a und/oder der Gehäuseeinheit 14a und zu der Antriebsachse 96a des Förderelements 92a ausgerichtet. Das Hauptkanalelement 98a erstreckt sich von der Einsaugöffnung 34a, insbesondere entlang der Haupterstreckungsrichtung der Fluidkühlungseinheit 30a, bis zur Abscheideeinheit 22a. Das Hauptkanalelement 98a ist einstückig mit dem Fluidkühlungselement 66a verbunden. Das Hauptkanalelement 98a, das Fluidkühlungselement 66a und das Kanalelement 56a der Fluidkühlungseinheit 30a weisen jeweils zumindest im Wesentlichen glatt ausgebildete Innenwände 104a auf, die insbesondere die den Fluidstrom 24a führenden Fluidkanäle 72a begrenzen. Vorzugsweise sind das Hauptkanalelement 98a, das Fluidkühlungselement 66a und das Kanalelement 56a der Fluidkühlungseinheit 30a, insbesondere die Innenwände 104a des Hauptkanalelements 98a, des Fluidkühlungselements 66a und des Kanalelements 56a der Fluidkühlungseinheit 30a, kantenfrei ausgebildet, wobei insbesondere die Innenwände 104a des Hauptkanalelements 98a, des Fluidkühlungselements 66a und des Kanalelements 56a der Fluidkühlungseinheit 30a entlang einer Führungsrichtung 106a des Fluidstroms 24a stetig ineinander übergehen.

Zusätzlich ist denkbar, dass die Werkzeugmaschine 10a eine Sensoreinheit 108a umfasst, welche in den Figuren nur angedeutet gezeigt ist. Die Sensoreinheit 108a umfasst zumindest ein Sensorelement 110a zu einer Erfassung einer Temperatur der Antriebseinheit 16a. Bevorzugt ist die Elektronikeinheit 18a dazu vorgesehen, zu einer Vermeidung einer Überhitzung der Antriebseinheit 16a beziehungsweise eines Ausfalls der Werkzeugmaschine 10a eine Leistungskenngrö-ße, beispielsweise eine maximale Drehzahl, der Antriebseinheit 16a in Abhängigkeit von der erfassten Temperatur zu steuern und/oder zu regeln, vorzugsweise zu begrenzen. Es ist auch denkbar, dass die Elektronikeinheit 18a dazu vorgesehen ist, in Abhängigkeit von der erfassten Temperatur, insbesondere bei einer Überschreitung eines Grenzwerts der Temperatur, eine Warnung an einen Benutzer auszugeben, beispielsweise über ein optisches, akustisches und/oder haptisches Signal.

In Figur 2 ist eine Detailansicht des Abscheideelements 80a auf einer Seite der Längsachse 12a der Werkzeugmaschine 10a gezeigt. Die Abscheideeinheit 22a ist derart ausgebildet, dass ein Wert der Fremdkörperdichte des Teilstroms 26a um insbesondere mindestens 50%, vorzugsweise mindestens 70%, bevorzugt mindestens 80% und besonders bevorzugt mindestens 90%, größer ist als ein Wert der Fremdkörperdichte des anderen Teilstroms 28a, wobei insbesondere die Fremdkörper eine Größe, insbesondere einen mittleren Durchmesser, von mindestens 500 µm, vorzugsweise mindestens 100 µm und besonders bevorzugt mindestens 20 µm, aufweisen. Die Abscheideeinheit 22a ist dazu vorgesehen, den Fluidstrom 24a über eine geometrische Ausbildung der Führungsstrecke 58a des, insbesondere angesaugten, Fluidstroms 24a in den Teilstrom 26a und den anderen Teilstrom 28a zu teilen, wobei insbesondere der Teilstrom 26a im Vergleich zu dem anderen Teilstrom 28a eine höhere Fremdkörperdichte aufweist. Die Abscheideeinheit 22a ist dazu vorgesehen, den Teilstrom 26a und den anderen Teilstrom 28a, insbesondere von der Führungsstrecke 58a auf die verschiedenen Teilführungstrecken 62a, 64a zu leiten.

Das Abscheideelement 80a bildet einen Fluideinlass 112a zur Leitung des Fluidstroms 24a und zwei Fluidauslässe 114a, 116a zur Leitung des Teilstroms 26a beziehungsweise des anderen Teilstroms 28a aus. Das Abscheideelement 80a weist in einer die Führungsstrecke 58a und/oder zumindest eine der Teilführungsstrecken 62a, 64a umfassenden Schnittebene, welche insbesondere einer Bildebene der Figur 2 entspricht, eine zumindest teilweise gebogene Grundform auf. Das Abscheideelement 80a ist derart ausgebildet, dass die Führungsstrecke 58a in einem Bereich des Fluideinlasses 114a zu der Teilführungsstrecke 64a des anderen Teilstroms 28a in einem Bereich des Fluidauslasses 114a einen Winkel 118a von insbesondere mindestens 30°, vorzugsweise mindestens 60° und besonders bevorzugt mindestens 80° aufweist. Das Abscheideelement 80a weist eine Grundform auf, die derart ausgebildet ist, dass Fremdkörper auf eine von der Führungsstrecke 58a des Fluidstroms 24a, insbesondere der Teilführungsstrecke 64a des anderen Teilstroms 28a, abweichende Bahn, insbesondere auf die Teilführungsstrecke 62a des Teilstroms 26a, geleitet werden. Das Abscheideelement 80a ist derart ausgebildet, dass der Teilstrom 26a zumindest teilweise getrennt von dem anderen Teilstrom 28a geführt wird. Das Abscheideelement 80a ist an der Fluidkühlungseinheit 30a angeordnet beziehungsweise als Teil der Fluidkühlungseinheit 30a ausgebildet. Das Abscheideelement 80a ist einstückig mit der Fluidkühlungseinheit 30a, insbesondere zumindest einem Kanalelement 56a der Fluidkühlungseinheit 30a, ausgebildet, welches in Figur 2 jedoch nicht gezeigt ist. Die Abscheideeinheit 22a, insbesondere das Abscheideelement 80a, ist fluidtechnisch zwischen der Einsaugöffnung 34a und der Antriebseinheit 16a ausgebildet.

Fremdkörper innerhalb des Fluidstroms 24a werden bei einem Durchströmen des Abscheideelements 80a in eine Strömungsrichtung entlang der Führungsstrecke 58a durch ihre Trägheit auf einer Bahn bewegt, welche von einer Masse der Fremdkörper abhängt. Vorzugsweise fliegen Fremdkörper mit einer größeren Masse auf einer weniger gebogenen Bahn wie Fremdkörper mit einer kleineren Masse. Fremdkörper mit einer großen Masse werden beim Durchströmen des Abscheideelements 80a zu einem Fluidauslass 116a der Fluidauslässe 114a, 116a geleitet, welcher zu einem Leiten des Teilstroms 26a vorgesehen ist. Ein anderer Fluidauslass 114a der Fluidauslässe 112a, 114a ist zu einer Leitung des anderen Teilstroms 28a vorgesehen. Vorzugsweise weist die Führungsstrecke 58a im Bereich des Fluideinlasses 112a zur Teilführungsstrecke 62a des Teilstroms 26a im Bereich des Fluidauslasses 116a einen kleineren Winkel auf als zu der Teilführungstrecke 64a des anderen Teilstroms 28a im Bereich des anderen Fluidauslasses 114a. Bevorzugt ist das Abscheideelement 80a derart ausgebildet, dass sich an einer die Teilführungsstrecke 62a des Teilstroms 26a begrenzenden Innenwand 122a des Abscheideelements 80a eine Verwirbelung des Fluids beziehungsweise des Fluidstroms bildet.

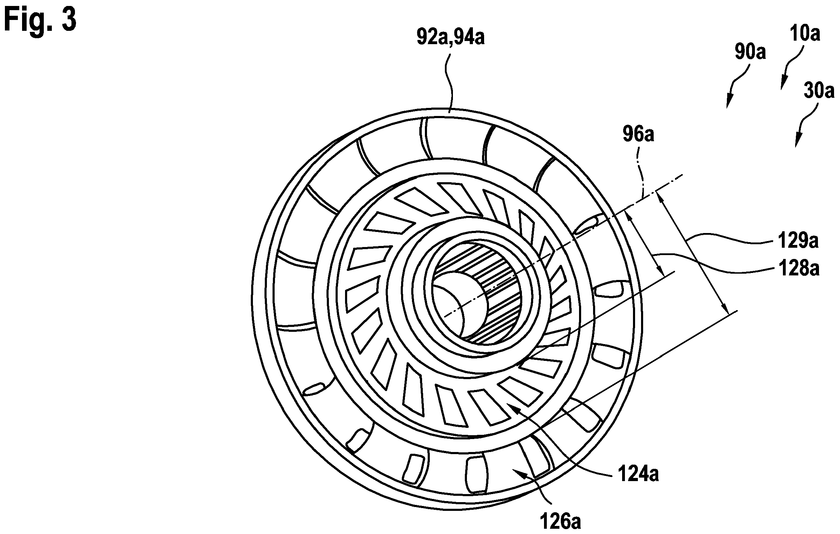

In Figur 3 ist eine perspektivische Ansicht des Förderelements 92a gezeigt. Das Förderelement 92a der Fördereinheit 90a ist in zumindest einem Bereich 124a des Förderelements 92a als Radiallüfter ausgebildet. Das Förderelement 92a ist in zumindest einem weiteren Bereich 126a des Förderelements 92a als Axiallüfter ausgebildet. Der Bereich 124a des Förderelements 92a ist entlang der Antriebsachse 96a des Förderelements 92a betrachtet von dem weiteren Bereich 126a umschlossen. Der Bereich 124a des Förderelements 92a weist einen kleineren minimalen radialen Abstand 128a zur Antriebsachse 96a des Förderelements 92a auf als der weitere Bereich 126a des Förderelements 92a (vgl. Abstand 129a). Das Förderelement 92a ist als zweiteiliges Lüfterrad ausgebildet. Der Bereich 124a des Förderelements 92a ist zu einer Förderung des anderen Teilstroms 28a durch die Antriebseinheit 16a vorgesehen. Der weitere Bereich 126a des Förderelements 92a ist zu einer Förderung des Teilstroms 26a durch das Kanalelement 56a beziehungsweise entlang der Außenwand 74a der Antriebseinheit 16a vorgesehen.

In Figur 4 ist ein schematischer Querschnitt der Elektronikvorrichtung 17a in dem Nahbereich 76a der Elektronikeinheit 18a gezeigt. Die Elektronikeinheit 18a ist direkt an dem Fluidkühlungselement 66a angeordnet. Die Elektronikeinheit 18a liegt zumindest teilweise an der Außenwand 74a des Fluidkühlungselements 66a an. Das Fluidkühlungselement 66a begrenzt den Fluidkanal 72a zu einer Leitung des Fluids, welcher eine zumindest im Wesentlichen runde Querschnittsfläche 130a aufweist. Die Querschnittsfläche 130a des Fluidkanals 72a ist zumindest im Wesentlichen senkrecht zu einer Mittelachse 132a des Fluidkühlungselements 66a ausgerichtet. Die Querschnittsfläche 130a des Fluidkanals 72a ist zumindest im Wesentlichen senkrecht zur Auflagefläche 70a und/oder der Außenwand 74a des Fluidkühlungselements 66a ausgerichtet. Die Querschnittsfläche 130a des Fluidkanals 72a weist eine Kontur auf, die zumindest im Wesentlichen kreisförmig ausgebildet ist. Bevorzugt beträgt ein maximaler Wert der Querschnittsfläche 130a des vom Fluidkühlungselement 66a begrenzten Fluidkanals 72a mindestens 100 mm², vorzugsweise mindestens 200 mm², bevorzugt mindestens 400 mm² und besonders bevorzugt mindestens 600 mm². Das Fluidkühlungselement 66a weist an der Außenwand 74a des Fluidkühlungselements 66a zumindest eine Anlagefläche 134a auf, die zumindest im Wesentlichen der Auflagefläche 70a der Elektronikeinheit 18a entspricht, wobei die Elektronikeinheit 18a über die Auflagefläche 70a an der Anlagefläche 134a des Fluidkühlungselements 66a anliegt. Die Anlagefläche 134a und die Auflagefläche 70a sind als ebene Flächen ausgebildet. Es ist aber auch denkbar, dass die Anlagefläche 134a und die Auflagefläche 70a als zumindest teilweise gebogene Flächen ausgebildet sind. Die Elektronikeinheit 18a, insbesondere ein elektronisches Bauteil 136a der Elektronikeinheit 18a, ist über die Auflagefläche 70a an dem Fluidkühlungselement 66a, insbesondere der Anlagefläche 134a, befestigt, beispielsweise angeklebt und/oder angeschraubt. Die Anlagefläche 134a und die Auflagefläche 70a weisen eine maximale Fläche von mindestens 100 mm², vorzugsweise mindestens 200 mm², bevorzugt mindestens 400 mm² und besonders bevorzugt mindestens 600 mm², auf. Bevorzugterweise weisen/weist die Anlagefläche 134a und/oder die Auflagefläche 70a eine maximale Fläche von höchstens 5000 mm², vorzugsweise höchstens 3000 mm² und besonders bevorzugt höchstens 2000 mm², auf. Die Auflagefläche 70a ist vollständig an dem Wärmediffusionselement 68a angeordnet. Das Fluidkühlungselement 66a weist eine sechseckige Grundform 138a auf, wobei die Anlagefläche 134a als eine Seite der Grundform 138a ausgebildet ist. Das Wärmediffusionselement 68a ist an dem elektronischen Bauteil 136a der Elektronikeinheit 18a angeordnet und dazu vorgesehen, von dem elektronischen Bauteil 136a erzeugte Wärme an das Fluidkühlungselement 66a abzuführen. Das elektronische Bauteil 136a ist als ein Leistungshalbleiter, wie beispielsweise ein IGBT oder ein MOSFET, ausgebildet. Es ist auch denkbar, dass alternativ oder zusätzlich eine Prozessoreinheit, eine Speichereinheit o. dgl. zu einer Kühlung an dem Wärmediffusionselement 68a angeordnet sind/ist. Das elektronische Bauteil 136a ist an der Leiterplatte 20a der Elektronikeinheit 18a befestigt. Es sind auch andere Ausgestaltungen der Elektronikeinheit 18a, insbesondere des Wärmediffusionselements 68a, denkbar.

Die Elektronikvorrichtung 17a umfasst eine Dichtungseinheit 140a, die dazu vorgesehen ist, die Elektronikeinheit 18a zusammen mit der Fluidkühlungseinheit 30a zumindest teilweise, insbesondere gegenüber dem Fluidströmungspfad 32a, zumindest im Wesentlichen luftdicht und/oder wasserdicht zu verschließen. Die Dichtungseinheit 140a weist ein Dichtungselement 142a auf, das aus einem wärmeisolierenden Material, insbesondere Gummi, ausgebildet ist. Das Dichtungselement 142a liegt zumindest teilweise an dem Wärmediffusionselement 68a an. Es ist auch denkbar, dass das Dichtungselement 142a das Wärmediffusionselement 68a zusammen mit dem Fluidkühlungselement 66a vollständig umschließt. Alternativ ist auch denkbar, dass das Dichtungselement 142a aus einem wärmeleitfähigen Material ausgebildet ist, das insbesondere eine Wärmeleitfähigkeit von mindestens 10 W/(m·K), vorzugsweise mindestens 50 W/(m·K), bevorzugt mindestens 100 W/(m·K), besonders bevorzugt mindestens 200 W/(m·K) und ganz besonders bevorzugt mindestens 400 W/(m·K), aufweist. Das Dichtungselement 142a umschließt das elektronische Bauteil 136a der Elektronikeinheit 18a zusammen mit dem Fluidkühlungselement 66a und dem Wärmediffusionselement 68a zumindest im Wesentlichen vollständig. Es ist denkbar, dass ein zwischen dem Dichtungselement 142a und der Elektronikeinheit 18a beziehungsweise dem Fluidkühlungselement 66a und/oder dem Wärmediffusionselement 68a eingeschlossenes Volumen mit einem wärmeisolierenden Gas gefüllt oder evakuiert ist. Insbesondere weist das evakuierte Volumen einen maximalen Druck von insbesondere weniger als 1000 mbar, vorzugsweise weniger als 300 mbar, bevorzugt weniger als 1 mbar und besonders bevorzugt weniger als 10⁻² mbar, auf.

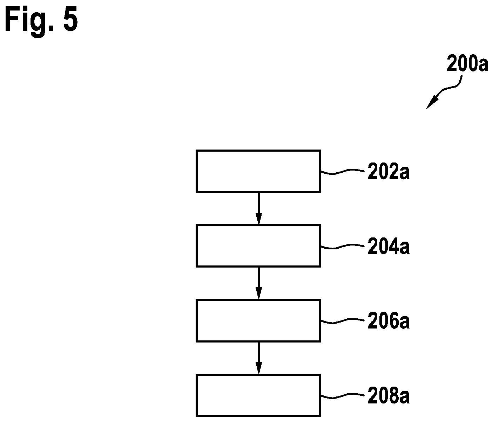

In Figur 5 ist ein beispielhafter Ablauf eines Verfahrens 200a zu einem Kühlen der Antriebseinheit 16a beziehungsweise der Elektronikeinheit 18a der Werkzeugmaschine 10a gezeigt. In einem Verfahrensschritt 202a des Verfahrens 200a wird mittels der Fördereinheit 90a der Fluidstrom 24a durch die Einsaugöffnung 34a gesaugt. In einem weiteren Verfahrensschritt 204a des Verfahrens 200a wird mittels des durch das Hauptkanalelement 98a strömenden Fluidstroms 24a über das Fluidkühlungselement 66a die Elektronikeinheit 18a gekühlt. Bei einem Durchströmen des Hauptkanalelements 98a strömt der Fluidstrom 24a durch das Fluidkühlungselement 66a, wobei zu einer Kühlung der Elektronikeinheit 18a Wärme von der Elektronikeinheit 18a über das Fluidkühlungselement 66a an den Fluidstrom 24a abgegeben wird. In einem weiteren Verfahrensschritt 206a des Verfahrens 200a wird mittels der Abscheideeinheit 22a, insbesondere dem Abscheideelement 80a, der Fluidstrom 24a in den, insbesondere fremdkörperbelasteten, Teilstrom 26a und den, insbesondere fremdkörperarmen, anderen Teilstrom 28a geteilt. Der Teilstrom 26a wird mittels der Abscheideeinheit 22a und der Fluidkühlungseinheit 30a durch das Kanalelement 56a entlang der Außenwand 84a der Antriebseinheit 16a geleitet, wobei die Antriebseinheit 16a über den Teilstrom 26a gekühlt wird, insbesondere Wärme von der Außenwand 84a der Antriebseinheit 16a an den Teilstrom 26a übertragen wird. Der andere Teilstrom 28a wird mittels der Abscheideeinheit 22a und der Fluidkühlungseinheit 30a in beziehungsweise durch die Antriebseinheit 16a geleitet, wobei die Antriebseinheit 16a, insbesondere Wicklungen der Antriebseinheit 16a, mittels des anderen Teilstroms 28a gekühlt werden, insbesondere wobei Wärme von der Antriebseinheit 16a an den anderen Teilstrom 28a übertragen wird. In einem weiteren Verfahrensschritt 208a des Verfahrens 200a wird über den Bereich 124a des Förderelements 92a der andere Teilstrom 28a in eine dem Bearbeitungsbereich 38a beziehungsweise der Auslassöffnung 46a zugewandte Richtung gefördert und durch die Auslassöffnung 46a aus der Werkzeugmaschine 10a, insbesondere der Gehäuseeinheit 14a und/oder der Fluidkühlungseinheit 30a, gefördert. In einem Verfahrensschritt des Verfahrens 200a, insbesondere dem Verfahrensschritt 208a, wird über den weiteren Bereich 126a des Förderelements 92a der Teilstrom 26a in zumindest im Wesentlichen parallel zur Antriebsachse 96a des Förderelements 92a ausgerichtete Richtungen gefördert und über die Fluidkühlungseinheit 30a zu den Auslassöffnungen 42a, 44a beziehungsweise aus der Werkzeugmaschine 10a, insbesondere der Gehäuseeinheit 14a und/oder der Fluidkühlungseinheit 30a, geleitet.

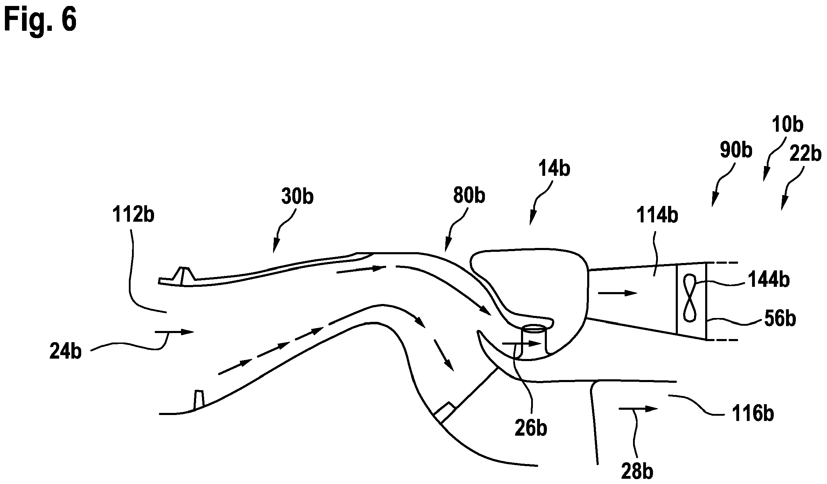

In den Figuren 6 bis 11 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 11 ist der Buchstabe a durch die Buchstaben b bis g ersetzt.

In Figur 6 ist eine alternative Ausgestaltung einer Abscheideeinheit 22b, insbesondere eines Abscheideelements 80b, beziehungsweise einer Fördereinheit 90b einer Werkzeugmaschine 10b gezeigt. Die Werkzeugmaschine 10b weist eine Gehäuseeinheit 14b, eine innerhalb der Gehäuseeinheit 14b angeordnete Antriebseinheit 16b, welche insbesondere in der Figur 6 nicht gezeigt ist, und die Abscheideeinheit 22b auf, wobei die Abscheideeinheit 22b dazu vorgesehen ist, zumindest einen durch die Gehäuseeinheit 14b geleiteten Fluidstrom 24b, insbesondere in Abhängigkeit von einer Fremdkörperdichte, in zumindest zwei Teilströme 26b, 28b zu teilen, wobei ein Teilstrom 26b der Teilströme 26b, 28b im Vergleich zu einem anderen Teilstrom 28b der Teilströme 26b, 28b eine höhere Fremdkörperdichte aufweist. Die Werkzeugmaschine 10b weist eine Fluidkühlungseinheit 30b auf, die dazu vorgesehen ist, die Antriebseinheit 16b mittels der zumindest zwei Teilströme 26b, 28b zu kühlen. Die in der Figur 6 dargestellte Werkzeugmaschine 10b weist eine zumindest im Wesentlichen analoge Ausgestaltung zu der in der Beschreibung der Figuren 1 bis 5 beschriebenen Werkzeugmaschine 10a auf, so dass bezüglich einer Ausgestaltung der in der Figur 6 dargestellten Werkzeugmaschine 10b zumindest im Wesentlichen auf die Beschreibung der Figuren 1 bis 5 verwiesen werden kann. Im Unterschied zu der in der Beschreibung der Figuren 1 bis 5 beschriebenen Werkzeugmaschine 10a weist die Abscheideeinheit 22b und/oder die Fördereinheit 90b der in der Figur 6 dargestellten Werkzeugmaschine 10b vorzugsweise ein weiteres Förderelement 144b auf. Das weitere Förderelement 144b ist an einem Fluidauslass 114b des Abscheideelements 80b angeordnet, welches zu einer Leitung des Fluidstroms 24b vorgesehen ist. Das weitere Förderelement 144b ist als ein Lüfter ausgebildet. Das weitere Förderelement 144b ist dazu vorgesehen, den Teilstrom 26b in ein Kanalelement 56b der Fluidkühlungseinheit 30b zu befördern, welches entlang einer Außenwand 84b der Antriebseinheit 16b angeordnet ist, welche insbesondere in der Figur 6 nicht gezeigt ist, und dazu vorgesehen ist, die Antriebseinheit 16b über den Teilstrom 26b zu kühlen. Das weitere Förderelement 144b ist dazu vorgesehen, Fremdkörper im Fluidstrom 24b in den Teilstrom 26b zu ziehen, wobei insbesondere eine Fremdkörperdichte des Teilstroms 26b erhöht wird und eine Fremdkörperdichte des anderen Teilstroms 28b verringert wird.

Das weitere Förderelement 144b ist, insbesondere fluidtechnisch, zwischen der Einsaugöffnung 34b der Fluidkühlungseinheit 30b und der Antriebseinheit 16b angeordnet. Das weitere Förderelement 144b ist zumindest größtenteils innerhalb der Fluidkühlungseinheit 30b, insbesondere dem Kanalelement 56b, angeordnet. Das weitere Förderelement 144b ist, insbesondere fluidtechnisch, zwischen der Abscheideeinheit 22b und der Antriebseinheit 22b beziehungsweise Auslassöffnungen 42b, 44b, 46b der Fluidkühlungseinheit 30b angeordnet. Es ist auch denkbar, dass das weitere Förderelement 144b zwischen einer Einsaugöffnung 36b der Fluidkühlungseinheit 30b und dem Abscheideelement 80b angeordnet ist. Das weitere Förderelement 144b ist dazu vorgesehen, den Teilstrom 26b und/oder den anderen Teilstrom 28b durch die Fluidkühlungseinheit 30b, durch die Abscheideeinheit 22b und/oder aus der Werkzeugmaschine 10b beziehungsweise der Gehäuseeinheit 14b zu fördern. Der Teilstrom 26b und der andere Teilstrom 28b werden nach einem Durchströmen beziehungsweise Vorbeiströmen an der Antriebseinheit 16b zusammen durch mehrere Auslassöffnungen 42b, 44b, 46b aus der Werkzeugmaschine 10b geführt. Insbesondere werden der Teilstrom 26b und der andere Teilstrom 28b innerhalb der Werkzeugmaschine 10b, insbesondere der Gehäuseeinheit 14b, nach einem Durchströmen beziehungsweise Vorbeiströmen an der Antriebseinheit 16b in einem Kanalelement der Fluidkühlungseinheit 30b zusammengeführt. Es ist jedoch auch denkbar, dass die Fluidkühlungseinheit 30b derart ausgebildet ist, dass der Teilstrom 26b und der andere Teilstrom 28b getrennt aus der Werkzeugmaschine 10b geführt werden.

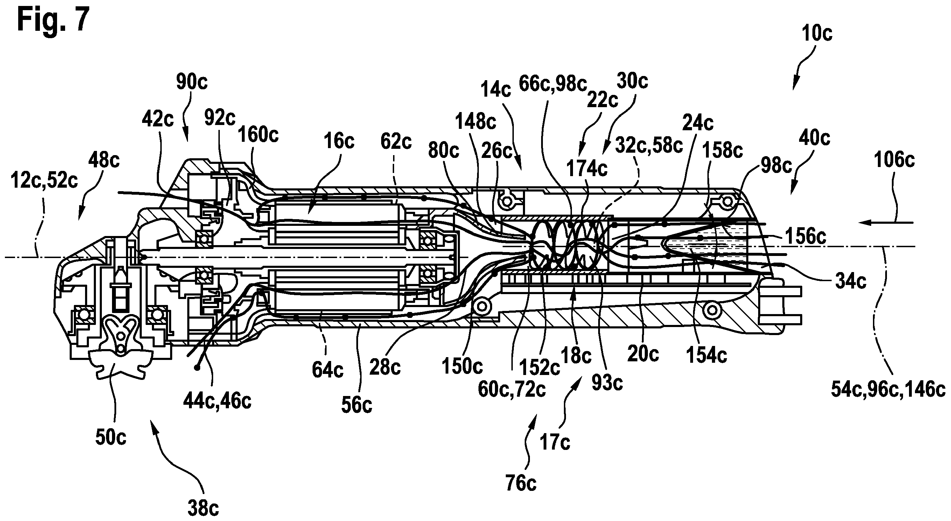

In Figur 7 ist eine alternative Ausgestaltung einer Werkzeugmaschine 10c gezeigt, insbesondere in einer analog zur Figur 1 ausgebildeten Darstellung. Die Werkzeugmaschine 10c weist eine Elektronikvorrichtung 17c, eine Gehäuseeinheit 14c, eine innerhalb der Gehäuseeinheit 14c angeordnete Antriebseinheit 16c und eine Abscheideeinheit 22c auf, wobei die Abscheideeinheit 22c dazu vorgesehen ist, zumindest einen durch die Gehäuseeinheit 14c geleiteten Fluidstrom 24c, insbesondere in Abhängigkeit von einer Fremdkörperdichte, in zumindest zwei Teilströme 26c, 28c zu teilen, wobei ein Teilstrom 26c der Teilströme 26c, 28c im Vergleich zu einem anderen Teilstrom 28c der Teilströme 26c, 28c eine höhere Fremdkörperdichte aufweist. Die Werkzeugmaschine 10c beziehungsweise die Elektronikvorrichtung 17c weisen/weist eine Fluidkühlungseinheit 30c auf, die dazu vorgesehen ist, die Antriebseinheit 16c mittels der zumindest zwei Teilströme 26c, 28c zu kühlen. Die Werkzeugmaschine 10c beziehungsweise die Elektronikvorrichtung 17c umfassen/umfasst eine Elektronikeinheit 18c, wobei die Fluidkühlungseinheit 30c dazu vorgesehen ist, die Elektronikeinheit 18c mittels eines Fluids beziehungsweise des Fluidstroms 24c zu kühlen. Die Elektronikeinheit 18c ist zumindest größtenteils, insbesondere vollständig, außerhalb eines Fluidströmungspfads 32c der Fluidkühlungseinheit 30c angeordnet. Die Werkzeugmaschine 10c, insbesondere die Abscheideeinheit 22c, weist eine Fördereinheit 90c zu einer Förderung des Fluids durch die Fluidkühlungseinheit 30c auf. Die in der Figur 7 dargestellte Werkzeugmaschine 10c weist eine zumindest im Wesentlichen analoge Ausgestaltung zu der in der Beschreibung der Figuren 1 bis 5 beschriebenen Werkzeugmaschine 10a auf, so dass bezüglich einer Ausgestaltung der in der Figur 7 dargestellten Werkzeugmaschine 10c zumindest im Wesentlichen auf die Beschreibung der Figuren 1 bis 5 verwiesen werden kann. Im Unterschied zu der in der Beschreibung der Figuren 1 bis 5 beschriebenen Werkzeugmaschine 10a weist die Abscheideeinheit 22c der in der Figur 7 dargestellten Werkzeugmaschine 10c vorzugsweise ein weiteres Abscheideelement 93c auf, welches innerhalb eines Hauptkanalelements 98c der Fluidkühlungseinheit 30c angeordnet ist und dazu vorgesehen ist, den Fluidstrom 24c zu einem Teilen der Teilströme 26c, 28c entlang des Hauptkanalelements 98c betrachtet auf eine Kreisbahn 174c zu leiten. Das weitere Abscheideelement 93c ist als ein schraubenförmiges Formteil ausgebildet. Das weitere Abscheideelement 93c begrenzt, insbesondere innerhalb und/oder zusammen mit dem Hauptkanalelement 98c einen Fluidführungskanal, welcher sich von der Einsaugöffnung 34c in Richtung der Antriebseinheit 16c entlang einer Kurve erstreckt, welche mit einer konstanten Steigung um eine Mantelfläche eines imaginären Zylinders verläuft. Insbesondere bildet die Kurve in einer Projektionsebene die Kreisbahn 174c aus. Die Fördereinheit 90c der Werkzeugmaschine 10c umfasst ein Förderelement 92c, welches einteilig mit einem Lüfter der Antriebseinheit 16c ausgebildet ist. Das Förderelement 92c ist von einer Einsaugöffnung 34c der Fluidkühlungseinheit 30c aus betrachtet hinter dem Hauptkanalelement 98c, dem weiteren Abscheideelement 93c und der Antriebseinheit 16c angeordnet. Das Förderelement 92c ist dazu vorgesehen, den Fluidstrom 24c durch die Einsaugöffnung 34c in die Werkzeugmaschine 10c, insbesondere die Fluidkühlungseinheit 30c zu saugen. Das Förderelement 92c ist dazu vorgesehen, den Fluidstrom 24c durch das Hauptkanalelement 98c und einen durch das Hauptkanalelement 98c und das weitere Abscheideelement 93c begrenzten Fluidkanal zu fördern und insbesondere nach der Abscheideeinheit 22c den Teilstrom 26c durch das Kanalelement 56c zu fördern. Ein Abscheideelement 80c der Abscheideeinheit 22c und die Fluidkühlungseinheit 30c sind derart ausgebildet, dass der Teilstrom 26c und der andere Teilstrom 28c nach einem Austritt aus dem weiteren Abscheideelement 93c getrennt voneinander geleitet werden. Das Abscheideelement 80c ist als ein Trichter ausgebildet, wobei insbesondere der andere Teilstrom 28c entlang einer Mittelachse 146c des Abscheideelements 80c, welche insbesondere koaxial zu einer Mittelachse des weiteren Abscheideelements 93c und des Hauptkanalelements 98c angeordnet ist, geleitet wird und der Teilstrom 28c entlang einer Außenwand 148c des Abscheideelements 80c geführt wird. Das Abscheideelement 80c ist zumindest teilweise konusförmig ausgebildet. Das Abscheideelement 80c begrenzt um die Mittelachse 146c zumindest eine Durchführung 150c, die insbesondere zu einer Leitung des anderen Teilstroms 28c, insbesondere durch beziehungsweise in die Antriebseinheit 16c, vorgesehen ist. Das Förderelement 92c ist dazu vorgesehen, den Fluidstrom 24c zusammen mit einem Abscheideelement 80c der Abscheideeinheit 22c in die Teilströme 26c, 28c zu teilen, wobei insbesondere der Teilstrom 26c einen größeren radialen Abstand von der Mittelachse des weiteren Abscheideelements 93c und des Hauptkanalelements 98c aufweist als der andere Teilstrom 28c. Das weitere Abscheideelement 93c wird entlang seiner Mittelachse betrachtet zumindest größtenteils von dem Hauptkanalelement 98c umschlossen. Das weitere Abscheideelement 98c ist dazu vorgesehen, insbesondere zu einer Kühlung der Elektronikeinheit 18c, das Fluid an einer einen Fluidkanal 72c begrenzenden Innenwand 152c des Fluidkühlungselements 66c beziehungsweise des Hauptkanalelements 98c zu verdichten. Das weitere Abscheideelement 98c ist dazu vorgesehen, eine Strömungsdauer des Fluids beziehungsweise des Fluidstroms 24c durch das Fluidkühlungselement 66c beziehungsweise das Hauptkanalelement 98c zu vergrößern, insbesondere im Vergleich zu einer Ausgestaltung, wobei das Fluidkühlungselement 66c beziehungsweise das Hauptkanalelement 98c hohl ausgebildet ist, insbesondere ohne das weitere Abscheideelement 93c.

Die Abscheideeinheit 22c beziehungsweise die Fluidkühlungseinheit 30c umfassen ein Filterelement 154c, welches dazu vorgesehen ist, die Fremdkörperdichte des Fluidstroms 24c zu ändern, insbesondere zu reduzieren. Das Filterelement 154c ist, insbesondere direkt, an der Einsaugöffnung 34c der Fluidkühlungseinheit 30c angeordnet. Das Filterelement 154c, insbesondere eine Filterfläche 156c des Filterelements 154c, ist zumindest teilweise quer zu einer Haupterstreckungsrichtung 54c der Fluidkühlungseinheit 30c angeordnet. Die Filterfläche 156c spannt mit der Haupterstreckungsrichtung 54c der Fluidkühlungseinheit 30c in einem Bereich des Filterelements 154c beziehungsweise der Einsaugöffnung 34c einen Winkel 158c auf, der einen Wert aus einem Wertebereich von insbesondere 8° bis 82°, vorzugsweise 10° bis 50° und besonders bevorzugt 15° bis 30°, aufweist. Der von der Filterfläche 156c und der Haupterstreckungsrichtung 54c der Fluidkühlungseinheit 30c aufgespannte Winkel 158c beträgt bevorzugterweise zumindest im Wesentlichen 18°. Das Filterelement 154c ist zumindest größtenteils konusförmig ausgebildet. Vorzugsweise kann durch die Ausgestaltung des Filterelements 154c ein geringer Strömungswiderstand des Filterelements 154c im Fluidstrom 24c erreicht werden. Der Fluidstrom 24c wird nach einem Vorbeiströmen an der Antriebseinheit 16c mittels des Förderelements 92c über mehrere Auslassöffnungen 42c, 44c, 46c aus der Werkzeugmaschine 10c befördert. Alternativ ist denkbar, dass das Filterelement 154c an dem Abscheideelement 80c angeordnet ist und zu einer Filterung, insbesondere einer Reduzierung einer Fremdkörperdichte, des anderen Teilstroms 28c vor einem Eintritt in die Antriebseinheit 16c vorgesehen ist. Insbesondere werden der Teilstrom 26c und der andere Teilstrom 28c innerhalb der Werkzeugmaschine 10c, insbesondere der Gehäuseeinheit 14c, nach einem Durchströmen beziehungsweise Vorbeiströmen an der Antriebseinheit 16c in einem weiteren Kanalelement 160c der Fluidkühlungseinheit 30c zusammengeführt. Es ist jedoch auch denkbar, dass die Fluidkühlungseinheit 30c derart ausgebildet ist, dass der Teilstrom 26c und der andere Teilstrom 28c getrennt aus der Werkzeugmaschine 10c geführt werden.

Es ist denkbar, dass die Fördereinheit 90c ein als Spiralrad ausgebildetes weiteres Förderelement aufweist, welches insbesondere in der Figur 7 nicht gezeigt ist oder dass das weitere Abscheideelement 93c mittels eines Antriebselements der Antriebseinheit 16c, insbesondere um seine Mittelachse, bewegbar ausgebildet ist. Insbesondere ist das Antriebselement dazu vorgesehen, das weitere Abscheideelement 93c anzutreiben und dadurch den Fluidstrom 24c durch die Fluidkühlungseinheit 30c, insbesondere das Hauptkanalelement 98c, zu fördern.

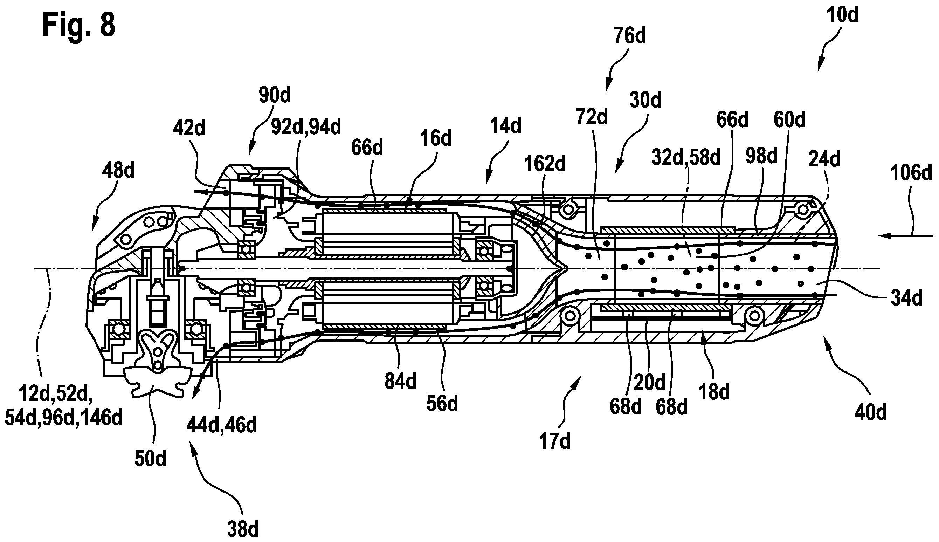

In Figur 8 ist eine alternative Ausgestaltung einer Werkzeugmaschine 10d gezeigt, insbesondere in einer analog zur Figur 1 ausgebildeten Darstellung. Die Werkzeugmaschine 10d weist eine Elektronikvorrichtung 17d, eine Gehäuseeinheit 14d und eine innerhalb der Gehäuseeinheit 14d angeordnete Antriebseinheit 16d auf. Die Werkzeugmaschine 10d beziehungsweise die Elektronikvorrichtung 17d weist eine Fluidkühlungseinheit 30d auf, die dazu vorgesehen ist, die Antriebseinheit 16d mittels der zumindest zwei Teilströme 26d, 28d zu kühlen. Die Werkzeugmaschine 10d beziehungsweise die Elektronikvorrichtung 17d umfasst eine Elektronikeinheit 18d, wobei die Fluidkühlungseinheit 30d dazu vorgesehen ist, die Elektronikeinheit 18d mittels eines Fluids beziehungsweise des Fluidstroms 24d zu kühlen. Die Elektronikeinheit 18d ist zumindest größtenteils, insbesondere vollständig, außerhalb eines Fluidströmungspfads 32d der Fluidkühlungseinheit 30d angeordnet. Die in der Figur 8 dargestellte Werkzeugmaschine 10d weist eine zumindest im Wesentlichen analoge Ausgestaltung zu der in der Beschreibung der Figuren 1 bis 5 beschriebenen Werkzeugmaschine 10a auf, so dass bezüglich einer Ausgestaltung der in der Figur 8 dargestellten Werkzeugmaschine 10d zumindest im Wesentlichen auf die Beschreibung der Figuren 1 bis 5 verwiesen werden kann. Im Unterschied zu der in der Beschreibung der Figuren 1 bis 5 beschriebenen Werkzeugmaschine 10a weist die in der Figur 8 dargestellte Werkzeugmaschine 10d vorzugsweise keine Abscheideeinheit auf. Die Fluidkühlungseinheit 30d ist dazu vorgesehen, mittels des angesaugten Fluidstroms 24d die Elektronikeinheit 18d und die Antriebseinheit 16d zu kühlen, wobei insbesondere die Antriebseinheit 16d über ein Entlangführen des Fluidstroms 24d an einer Außenwand 84d der Antriebseinheit 16d erfolgt. Die Fluidkühlungseinheit 30d umfasst ein Kanalelement 56d, das den Fluidstrom 24d direkt an und zumindest im Wesentlichen parallel zu der Außenwand 84d der Antriebseinheit 16d entlang führt. Der Fluidstrom 24d wird über eine Fördereinheit 90d durch die Werkzeugmaschine 10d gefördert. Die Fördereinheit 90d umfasst ein Förderelement 92d, welches, insbesondere fluidtechnisch, von der Einsaugöffnung 34d betrachtet hinter der Antriebseinheit 16d angeordnet ist. Die Fluidkühlungseinheit 30d umfasst ein Fluidkühlungselement 66d, welches dazu vorgesehen ist, Wärme von der Elektronikeinheit 18d an den Fluidstrom 24d abzuführen. Das Fluidkühlungselement 66d ist einstückig mit einem Hauptkanalelement 98d der Fluidkühlungseinheit 30d ausgebildet, wobei insbesondere ein gesamter eingesaugter Fluidstrom 24d in einem Nahbereich 76d der Elektronikeinheit 18d durch das Hauptkanalelement 98d und das Fluidkühlungselement 66d verläuft. Die Fluidkühlungseinheit 30d umfasst ein Umlenkelement 162d, welches insbesondere zumindest im Wesentlichen kegelförmig ausgebildet ist. Das Umlenkelement 162d ist stromlinienförmig ausgebildet. Das Umlenkelement 162d ist dazu vorgesehen, den Fluidstrom 24d von dem Hauptkanalelement 98d in das Kanalelement 56d zu leiten, wobei insbesondere der Fluidstrom 24d von einer Mittelachse 146d des Hauptkanalelements 98d radial nach außen geführt wird.

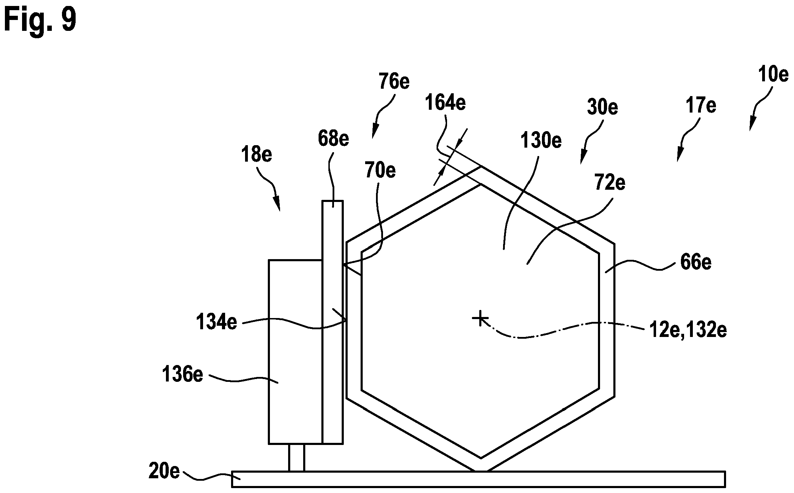

In Figur 9 ist eine alternative Ausgestaltung eines Fluidkühlungselements 66e einer Fluidkühlungseinheit 30e einer Werkzeugmaschine 10e beziehungsweise einer Elektronikvorrichtung 17e gezeigt. Die in der Figur 9 dargestellte Werkzeugmaschine 10e beziehungsweise Elektronikvorrichtung 17e weist eine zumindest im Wesentlichen analoge Ausgestaltung zu der in der Beschreibung der Figuren 1 bis 5 beschriebenen Werkzeugmaschine 10a beziehungsweise Elektronikvorrichtung 17a auf, so dass bezüglich einer Ausgestaltung der in der Figur 9 dargestellten Werkzeugmaschine 10e beziehungsweise Elektronikvorrichtung 17e zumindest im Wesentlichen auf die Beschreibung der Figuren 1 bis 5 verwiesen werden kann. Im Unterschied zu der in der Beschreibung der Figuren 1 bis 5 beschriebenen Werkzeugmaschine 10a beziehungsweise Elektronikvorrichtung 17a begrenzt das Fluidkühlungselement 66e der Fluidkühlungseinheit 30e der in der Figur 9 dargestellte Werkzeugmaschine 10e beziehungsweise Elektronikvorrichtung 17e vorzugsweise einen Fluidkanal 72e, welcher eine eckige Querschnittsfläche 130e aufweist. Die Querschnittsfläche 130e des vom Fluidkühlungselement 66e begrenzten Fluidkanals 72e ist sechseckig ausgebildet. Eine minimale Wandstärke 164e des Fluidkühlungselements 66e beträgt insbesondere mindestens 0,5 mm, vorzugsweise mindestens 1 mm, bevorzugt mindestens 1,5 mm und besonders bevorzugt mindestens 2 mm, und/oder insbesondere höchstens 10 mm, vorzugsweise höchstens 6 mm und bevorzugt höchstens 4 mm. Bevorzugt beträgt ein maximaler Wert der Querschnittsfläche 130e des vom Fluidkühlungselement 66e begrenzten Fluidkanals 72e mindestens 100 mm², vorzugsweise mindestens 200 mm², bevorzugt mindestens 400 mm² und besonders bevorzugt mindestens 600 mm². Insbesondere ist eine Elektronikeinheit 18e der Werkzeugmaschine 10e ohne eine Dichtungseinheit ausgebildet. Es sind aber auch andere Ausgestaltungen der Fluidkühlungseinheit 30e und/oder der Elektronikeinheit 18e denkbar.

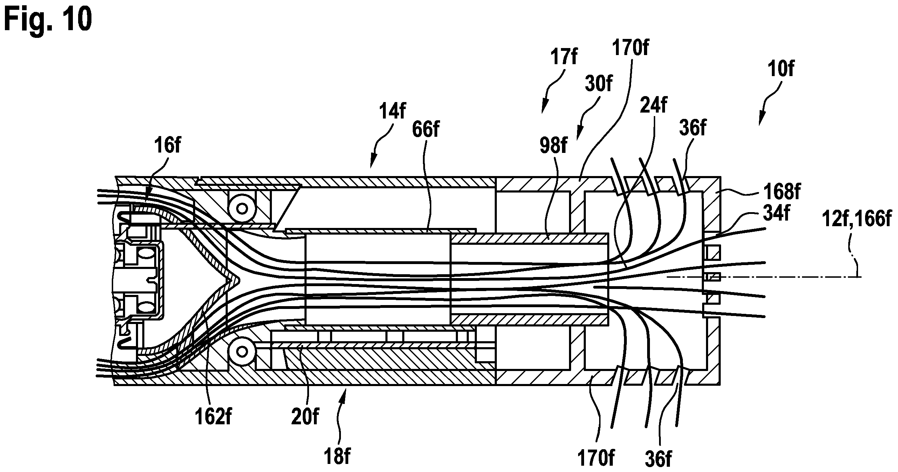

In Figur 10 ist eine andere alternative Ausgestaltung einer Werkzeugmaschine 10f beziehungsweise einer Elektronikvorrichtung 17f gezeigt, wobei die Werkzeugmaschine 10f analog zur Figur 1 in einem Längsschnitt gezeigt ist. Die in der Figur 10 dargestellte Werkzeugmaschine 10f weist eine zumindest im Wesentlichen analoge Ausgestaltung zu der in der Beschreibung der Figur 8 beschriebenen Werkzeugmaschine 10d auf, so dass bezüglich einer Ausgestaltung der in der Figur 10 dargestellten Werkzeugmaschine 10f zumindest im Wesentlichen auf die Beschreibung der Figur 8 verwiesen werden kann. Im Unterschied zu der in der Beschreibung der Figur 8 beschriebenen Werkzeugmaschine 10d begrenzt eine Gehäuseeinheit 14f der in der Figur 10 dargestellten Werkzeugmaschine 10f mehr als eine Einsaugöffnung 34f, 36f zu einem Einsaugen eines Fluids beziehungsweise eines Fluidstroms 24f zur Kühlung einer Elektronikeinheit 18f und einer Antriebseinheit 16f mittels einer Fluidkühlungseinheit 30f. Die Einsaugöffnungen 34f, 36f sind dazu vorgesehen, Fluid beziehungsweise den Fluidstrom 24f in ein Hauptkanalelement 98f der Fluidkühlungseinheit 30f zu leiten. Die Gehäuseeinheit 14f und/oder die Fluidkühlungseinheit 30f begrenzen zehn Einsaugöffnungen 34f, 36f, wobei vier Einsaugöffnungen 34f der zehn Einsaugöffnungen 34f, 36f an einer zumindest im Wesentlichen senkrecht zu einer Mittelachse 166f des Hauptkanalelement 98f beziehungsweise zu einer Längsachse 12f der Werkzeugmaschine 10f ausgerichteten Außenwand 168f der Werkzeugmaschine 10f, insbesondere der Gehäuseeinheit 14f, angeordnet sind. Jeweils drei Einsaugöffnungen 36f der zehn Einsaugöffnungen 34f, 36f sind an voneinander abgewandten Außenwänden 170f der Werkzeugmaschine 10f, insbesondere der Gehäuseeinheit 14f, angeordnet, welche insbesondere zumindest im Wesentlichen parallel zur Mittelachse 166f des Hauptkanalelements 98f beziehungsweise zu der Längsachse 12f der Werkzeugmaschine 10f ausgerichtet sind. Die zehn Einsaugöffnungen 34f, 36f sind dazu vorgesehen, das Fluid beziehungsweise den Fluidstrom 24f an einer von einem Bearbeitungsbereich 38f der Werkzeugmaschine 10f abgewandten Seite der Werkzeugmaschine 10f aufzunehmen und, insbesondere vor einem Durchströmen eines Fluidkühlungselements 66f der Fluidkühlungseinheit 30f, im Hauptkanalelement 98f zu bündeln. Es sind aber auch andere Ausgestaltungen der Gehäuseeinheit 14f und/oder der Fluidkühlungseinheit 30f denkbar, insbesondere mit einer von Zehn abweichenden Anzahl an Einsaugöffnungen 34f, 36f. Es ist denkbar, dass an den Einsaugöffnungen 34f, 36f, insbesondere jeweils, ein Filterelement zu einer Reduzierung einer Fremdkörperdichte des angesaugten Fluidstroms 24f angebracht ist.

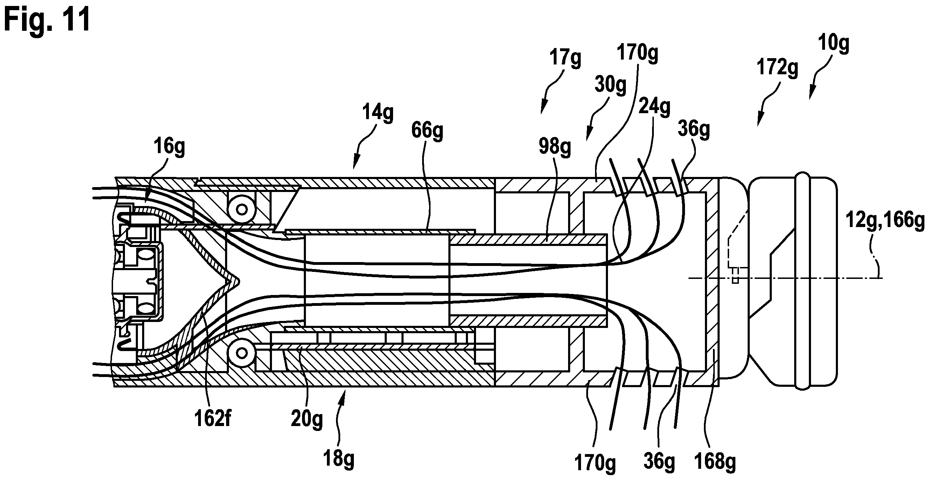

In Figur 11 ist eine weitere andere alternative Ausgestaltung einer Werkzeugmaschine 10g beziehungsweise einer Elektronikvorrichtung 17g gezeigt, wobei die Werkzeugmaschine 10g analog zur Figur 1 in einem Längsschnitt gezeigt ist. Die in der Figur 11 dargestellte Werkzeugmaschine 10g weist eine zumindest im Wesentlichen analoge Ausgestaltung zu der in der Beschreibung der Figur 8 beschriebenen Werkzeugmaschine 10d auf, so dass bezüglich einer Ausgestaltung der in der Figur 11 dargestellten Werkzeugmaschine 10g zumindest im Wesentlichen auf die Beschreibung der Figur 8 verwiesen werden kann. Im Unterschied zu der in der Beschreibung der Figur 8 beschriebenen Werkzeugmaschine 10d begrenzt eine Gehäuseeinheit 14g der in der Figur 11 dargestellte Werkzeugmaschine 10g mehr als eine Einsaugöffnung 36g zu einem Einsaugen eines Fluids beziehungsweise eines Fluidstroms 24g zur Kühlung einer Elektronikeinheit 18g und einer Antriebseinheit 16g mittels einer Fluidkühlungseinheit 30g. Die Einsaugöffnungen 36g sind dazu vorgesehen, Fluid beziehungsweise den Fluidstrom 24g in ein Hauptkanalelement 98g der Fluidkühlungseinheit 30g zu leiten. Die Gehäuseeinheit 14g und/oder die Fluidkühlungseinheit 30g begrenzen sechs Einsaugöffnungen 36g, wobei jeweils drei Einsaugöffnungen 36g der sechs Einsaugöffnungen 36g an voneinander abgewandten Außenwänden 170g der Werkzeugmaschine 10g, insbesondere der Gehäuseeinheit 14g, angeordnet sind, welche insbesondere zumindest im Wesentlichen parallel zu einer Mittelachse 166g des Hauptkanalelements 98g beziehungsweise zu einer Längsachse 12g der Werkzeugmaschine 10g ausgerichtet sind. Die sechs Einsaugöffnungen 36g sind dazu vorgesehen, das Fluid beziehungsweise den Fluidstrom 24g an einer von einem Bearbeitungsbereich 38g der Werkzeugmaschine 10g abgewandten Seite der Werkzeugmaschine 10g aufzunehmen und, insbesondere vor einem Durchströmen eines Fluidkühlungselements 66g der Fluidkühlungseinheit 30g, im Hauptkanalelement 98g zu bündeln. Die Werkzeugmaschine 10g ist als eine akkubetriebene Werkzeugmaschine ausgebildet. An einer zumindest im Wesentlichen senkrecht zur Mittelachse 166g des Hauptkanalelements 98g beziehungsweise zur Längsachse 12g der Werkzeugmaschine 10g ausgerichteten Außenwand 168g der Werkzeugmaschine 10g, insbesondere der Gehäuseeinheit 14g, ist ein Akkupack 172g befestigt. Die Einsaugöffnungen 36g sind von dem Akkupack 172g abgewandt ausgerichtet. Es sind aber auch andere Ausgestaltungen der Gehäuseeinheit 14g und/oder der Fluidkühlungseinheit 30g denkbar, insbesondere mit einer von Sechs abweichenden Anzahl an Einsaugöffnungen 36g.

## Patentansprüche

1. Elektronikvorrichtung für eine Werkzeugmaschine, mit zumindest einer Elektronikeinheit (18a; 18c; 18d; 18e; 18f; 18g) und mit zumindest einer Fluidkühlungseinheit (30a; 30c; 30d; 30e; 30f; 30g) zur Kühlung der Elektronikeinheit (18a; 18c; 18d; 18e; 18f; 18g) mittels eines Fluids, wobei die Elektronikeinheit (18a; 18c; 18d; 18e; 18f; 18g) zumindest größtenteils, insbesondere vollständig, außerhalb eines Fluidströmungspfads (32a; 32c; 32d; 32e; 32f; 32g) der Fluidkühlungseinheit (30a; 30c; 30d; 30e; 30f; 30g) angeordnet ist, **dadurch gekennzeichnet, dass** die Fluidkühlungseinheit (30a; 30c; 30d; 30e; 30f; 30g) zumindest ein Fluidkühlungselement (66a; 66c; 66d; 66e; 66f; 66g) umfasst, an dem die Elektronikeinheit (18a; 18c; 18d; 18e; 18f; 18g) zumindest teilweise anliegt, wobei das Fluidkühlungselement (66a; 66c; 66d; 66e; 66f; 66g) zumindest teilweise, insbesondere zumindest in einem Bereich, an dem die Elektronikeinheit (18a; 18c; 18d; 18e; 18f; 18g) anliegt, aus einem Material ausgebildet ist, das eine Wärmeleitfähigkeit von mindestens 10 W/(m·K) aufweist.

2. Elektronikvorrichtung nach Anspruch 1, **dadurch gekennzeichnet, dass** das Fluidkühlungselement (66a; 66c; 66d; 66e; 66f; 66g) als ein Kanalelement zu einer Leitung des Fluids ausgebildet ist, wobei die Elektronikeinheit (18a; 18c; 18d; 18e; 18f; 18g) zumindest teilweise an einer Außenwand (74a; 74c; 74d; 74e; 74f; 74g) des Fluidkühlungselements (66a; 66c; 66d; 66e; 66f; 66g) anliegt.

3. Elektronikvorrichtung zumindest nach Anspruch 1, **dadurch gekennzeichnet, dass** das Fluidkühlungselement (66a; 66c; 66d; 66e; 66f; 66g) zumindest einen Fluidkanal (72a; 72c; 72d; 72e; 72f; 72g) zu einer Leitung des Fluids begrenzt, welcher eine zumindest im Wesentlichen runde Querschnittsfläche (130a; 130e) aufweist.

4. Elektronikvorrichtung zumindest nach Anspruch 2, **dadurch gekennzeichnet, dass** das Fluidkühlungselement (66a; 66c; 66d; 66e; 66f; 66g) an der Außenwand (74a; 74c; 74d; 74e; 74f; 74g) zumindest eine Anlagefläche (134a; 134c; 134d; 134e; 134f; 134g) aufweist, die zumindest im Wesentlichen zumindest einer Auflagefläche (70a; 70c; 70d; 70e; 70f; 70g) der Elektronikeinheit (18a; 18c; 18d; 18e; 18f; 18g) entspricht, wobei die Elektronikeinheit (18a; 18c; 18d; 18e; 18f; 18g) über die Auflagefläche (70a; 70c; 70d; 70e; 70f; 70g) an der Anlagefläche (134a; 134c, 134d; 134e; 134f; 134g) des Fluidkühlungselements (66a; 66c; 66d; 66e; 66f; 66g) anliegt.

5. Elektronikvorrichtung nach einem der vorhergehenden Ansprüche, **dadurch gekennzeichnet, dass** die Fluidkühlungseinheit (30a; 30c; 30d; 30e; 30f; 30g) zumindest ein Fluidkühlungselement (66a; 66c; 66d; 66e; 66f; 66g) umfasst, wobei sich der Fluidströmungspfad (32a; 32c; 32d; 32e; 32f; 32g) zumindest in einem Nahbereich (76a; 76c; 76d; 76e; 76f; 76g) der Elektronikeinheit (18a; 18c; 18d; 18e; 18f; 18g) zumindest im Wesentlichen vollständig innerhalb des Fluidkühlungselements (66a; 66c; 66d; 66e; 66f; 66g) erstreckt.

6. Elektronikvorrichtung nach einem der vorhergehenden Ansprüche, **gekennzeichnet durch** zumindest eine Dichtungseinheit (140a), die dazu vorgesehen ist, die Elektronikeinheit (18a) zusammen mit der Fluidkühlungseinheit (30a) zumindest teilweise, insbesondere gegenüber dem Fluidströmungspfad (32a), zumindest im Wesentlichen luftdicht und/oder wasserdicht zu verschließen.

7. Werkzeugmaschine, insbesondere handgeführte Werkzeugmaschine, mit zumindest einer Elektronikvorrichtung (18a; 18c; 18d; 18e; 18f; 18g) nach einem der vorhergehenden Ansprüche.

8. Werkzeugmaschine nach Anspruch 7, **gekennzeichnet durch** zumindest eine Antriebseinheit (16a; 16c; 16d; 16e; 16f; 16g), wobei die Fluidkühlungseinheit (30a; 30c; 30d; 30e; 30f; 30g) zu einer Kühlung der Antriebseinheit (16a; 16c; 16d; 16e; 16f; 16g) vorgesehen ist.

## Claims

1. Electronic device for a power tool, comprising at least one electronic unit (18a; 18c; 18d; 18e; 18f; 18g), and comprising at least one fluid cooling unit (30a; 30c; 30d; 30e; 30f; 30g) for cooling the electronic unit (18a; 18c; 18d; 18e; 18f; 18g) by means of a fluid, wherein the electronic unit (18a; 18c; 18d; 18e; 18f; 18g) is arranged at least largely, in particular entirely, outside of a fluid flow path (32a; 32c; 32d; 32e; 32f; 32g) of the fluid cooling unit (30a; 30c; 30d; 30e; 30f; 30g), **characterized in that** the fluid cooling unit (30a; 30c; 30d; 30e; 30f; 30g) comprises at least one fluid cooling element (66a; 66c; 66d; 66e; 66f; 66g) against which the electronic unit (18a; 18c; 18d; 18e; 18f; 18g) bears, at least partially, wherein the fluid cooling element (66a; 66c; 66d; 66e; 66f; 66g) is at least partially, in particular at least in a region against which the electronic unit (18a; 18c; 18d; 18e; 18f; 18g) bears, made of a material having a thermal conductivity of at least 10 W/(m·K).

2. Electronic device according to Claim 1, **characterized in that** the fluid cooling element (66a; 66c; 66d; 66e; 66f; 66g) is realized as a channel element for conducting the fluid, wherein the electronic unit (18a; 18c; 18d; 18e; 18f; 18g) bears at least partially against an outer wall (74a; 74c; 74d; 74e; 74f; 74g) of the fluid cooling element (66a; 66c; 66d; 66e; 66f; 66g).

3. Electronic device at least according to Claim 1, **characterized in that** the fluid cooling element (66a; 66c; 66d; 66e; 66f; 66g) delimits at least one fluid channel (72a; 72c; 72d; 72e; 72f; 72g), for conducting the fluid, that has an at least substantially round cross-sectional area (130a; 130e).

4. Electronic device at least according to Claim 2, **characterized in that** the fluid cooling element (66a; 66c; 66d; 66e; 66f; 66g) has, on the outer wall (74a; 74c; 74d; 74e; 74f; 74g), at least one contact surface (134a; 134c; 134d; 134e; 134f; 134g) that at least substantially corresponds at least to a support surface (70a; 70c; 70d; 70e; 70f; 70g) of the electronic unit (18a; 18c; 18d; 18e; 18f; 18g), wherein the electronic unit (18a; 18c; 18d; 18e; 18f; 18g) bears against the contact surface (134a; 134c, 134d; 134e; 134f; 134g) of the fluid cooling element (66a; 66c; 66d; 66e; 66f; 66g) via the support surface (70a; 70c; 70d; 70e; 70f; 70g).

5. Electronic device according to any one of the preceding claims, **characterized in that** the fluid cooling unit (30a; 30c; 30d; 30e; 30f; 30g) comprises at least one fluid cooling element (66a; 66c; 66d; 66e; 66f; 66g), wherein the fluid flow path (32a; 32c; 32d; 32e; 32f; 32g), at least in proximity (76a; 76c; 76d; 76e; 76f; 76g) to the electronic unit (18a; 18c; 18d; 18e; 18f; 18g), extends at least substantially entirely within the fluid cooling element (66a; 66c; 66d; 66e; 66f; 66g).

6. Electronic device according to any one of the preceding claims, **characterized by** at least one sealing unit (140a) designed to close the electronic unit (18a), together with the fluid cooling unit (30a), at least partially, in particular with respect to the fluid flow path (32a), at least substantially in an airtight and/or watertight manner.

7. Power tool, in particular a hand-held power tool, comprising at least one electronic device (18a; 18c; 18d; 18e; 18f; 18g) according to any one of the preceding claims.

8. Power tool according to Claim 7, **characterized by** at least one drive unit (16a; 16c; 16d; 16e; 16f; 16g), wherein the fluid cooling unit (30a; 30c; 30d; 30e; 30f; 30g) is designed to cool the drive unit (16a; 16c; 16d; 16e; 16f; 16g).

## Revendications

1. Dispositif électronique pour une machine-outil, comprenant au moins une unité électronique (18a ; 18c ; 18d ; 18e ; 18f ; 18g) et comprenant au moins une unité de refroidissement par fluide (30a ; 30c ; 30d ; 30e ; 30f ; 30g) destinée à refroidir l'unité électronique (18a ; 18c ; 18d ; 18e ; 18f ; 18g) au moyen d'un fluide, l'unité électronique (18a ; 18c ; 18d ; 18e ; 18f ; 18g) étant au moins en majeure partie, notamment entièrement, disposée en-dehors d'un trajet d'écoulement de fluide (32a ; 32c ; 32d ; 32e ; 32f ; 32g) de l'unité de refroidissement par fluide (30a ; 30c ; 30d ; 30e ; 30f ; 30g), **caractérisé en ce que** l'unité de refroidissement par fluide (30a ; 30c ; 30d ; 30e ; 30f ; 30g) comporte au moins un élément de refroidissement par fluide (66a ; 66c ; 66d ; 66e ; 66f ; 66g) contre lequel l'unité électronique (18a ; 18c ; 18d ; 18e ; 18f ; 18g) repose au moins partiellement, l'élément de refroidissement par fluide (66a ; 66c ; 66d ; 66e ; 66f ; 66g) étant au moins partiellement, notamment dans une zone au niveau de laquelle repose l'unité électronique (18a ; 18c ; 18d ; 18e ; 18f ; 18g), formé d'un matériau qui présente une conductivité thermique d'au moins 10 W/(m·K).

2. Dispositif électronique selon la revendication 1, **caractérisé en ce que** l'élément de refroidissement par fluide (66a ; 66c ; 66d ; 66e ; 66f ; 66g) est réalisé sous la forme d'un élément de canal destiné à une conduite du fluide, l'unité électronique (18a ; 18c ; 18d ; 18e ; 18f ; 18g) reposant au moins partiellement contre une paroi extérieure (74a ; 74c ; 74d ; 74e ; 74f ; 74g) de l'élément de refroidissement par fluide (66a ; 66c ; 66d ; 66e ; 66f ; 66g).

3. Dispositif électronique selon au moins la revendication 1, **caractérisé en ce que** l'élément de refroidissement par fluide (66a ; 66c ; 66d ; 66e ; 66f ; 66g) délimite au moins un canal à fluide (72a ; 72c ; 72d ; 72e ; 72f ; 72g) destiné à une conduite du fluide, lequel possède une surface de section transversale (130a ; 130e) au moins essentiellement ronde.

4. Dispositif électronique selon au moins la revendication 2, **caractérisé en ce que** l'élément de refroidissement par fluide (66a ; 66c ; 66d ; 66e ; 66f ; 66g) possède au niveau de la paroi extérieure (74a ; 74c ; 74d ; 74e ; 74f ; 74g) au moins une surface de contact (134a ; 134c ; 134d ; 134e ; 134f ; 134g), laquelle correspond au moins essentiellement à une surface de contact (70a ; 70c ; 70d ; 70e ; 70f ; 70g) de l'unité électronique (18a ; 18c ; 18d ; 18e ; 18f ; 18g), l'unité électronique (18a ; 18c ; 18d ; 18e ; 18f ; 18g) reposant par le biais de la surface de contact (70a ; 70c ; 70d ; 70e ; 70f ; 70g) contre la surface de contact (134a ; 134c ; 134d ; 134e ; 134f ; 134g) de l'élément de refroidissement par fluide (66a ; 66c ; 66d ; 66e ; 66f ; 66g) .

5. Dispositif électronique selon l'une des revendications précédentes, **caractérisé en ce que** l'unité de refroidissement par fluide (30a ; 30c ; 30d ; 30e ; 30f ; 30g) comprend au moins un élément de refroidissement par fluide (66a ; 66c ; 66d ; 66e ; 66f ; 66g), le trajet d'écoulement de fluide (32a ; 32c ; 32d ; 32e ; 32f ; 32g) s'étendant au moins essentiellement entièrement à l'intérieur de l'élément de refroidissement par fluide (66a ; 66c ; 66d ; 66e ; 66f ; 66g) au moins dans une zone de proximité (76a ; 76c ; 76d ; 76e ; 76f ; 76g) de l'unité électronique (18a ; 18c ; 18d ; 18e ; 18f ; 18g).

6. Dispositif électronique selon l'une des revendications précédentes, **caractérisé par** au moins une unité d'étanchéité (140a), laquelle est prévue pour fermer l'unité électronique (18a) conjointement avec l'unité de refroidissement par fluide (30a) au moins partiellement, notamment par rapport au trajet d'écoulement de fluide (32a), au moins essentiellement de manière étanche à l'air et/ou étanche à l'eau.

7. Machine-outil, notamment machine-outil à guidage manuel, comprenant au moins un dispositif électronique (18a ; 18c ; 18d ; 18e ; 18f ; 18g) selon l'une des revendications précédentes.

8. Machine-outil selon la revendication 7, **caractérisée par** au moins une unité d'entraînement (16a ; 16c ; 16d ; 16e ; 16f ; 16g), l'unité de refroidissement par fluide (30a ; 30c ; 30d ; 30e ; 30f ; 30g) étant prévue pour un refroidissement de l'unité d'entraînement (16a ; 16c ; 16d ; 16e ; 16f ; 16g).
